(19) **Europäisches Patentamt**
**European Patent Office**
**Office européen des brevets**

(11) **EP 4 344 255 A1**

(12) **EUROPEAN PATENT APPLICATION**
published in accordance with Art. 153(4) EPC

(43) Date of publication:
**27.03.2024  Bulletin 2024/13**

(21) Application number: **22832173.3**

(22) Date of filing: **30.06.2022**

(51) International Patent Classification (IPC):
*H04S 7/00* (2006.01)    *B60R 16/023* (2006.01)

(52) Cooperative Patent Classification (CPC):
Y02T 10/84

(86) International application number:
**PCT/CN2022/102818**

(87) International publication number:
**WO 2023/274361 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.06.2021  CN 202110744208**

(71) Applicant: **Huawei Technologies Co., Ltd.
Shenzhen, Guangdong 518129 (CN)**

(72) Inventors:
• **HUANG, Tianyu
  Shenzhen, Guangdong 518129 (CN)**
• **DONG, Chunhe
  Shenzhen, Guangdong 518129 (CN)**
• **XIE, Shangwei
  Shenzhen, Guangdong 518129 (CN)**

(74) Representative: **Gill Jennings & Every LLP
The Broadgate Tower
20 Primrose Street
London EC2A 2ES (GB)**

(54) **METHOD FOR CONTROLLING SOUND PRODUCTION APPARATUSES, AND SOUND PRODUCTION SYSTEM AND VEHICLE**

(57)    This application provides a sound-making apparatus control method, a sound-making system, and a vehicle. The method includes: A first device obtains position information of a plurality of areas in which a plurality of users are located. The first device controls, based on the position information of the plurality of areas and position information of a plurality of sound-making apparatuses, the plurality of sound-making apparatuses to work. In embodiments of this application, a user does not need to manually adjust the sound making apparatus. This helps reduce learning costs of the user and reduce complex operations of the user. In addition, this helps a plurality of users enjoy good listening effect, and helps improve user experience.

FIG. 31

## Description

This application claims priority to Chinese Patent Application No. 202110744208.4, filed with the China National Intellectual Property Administration on June 30, 2021 and entitled "SOUND-MAKING APPARATUS CONTROL METHOD, SOUND-MAKING SYSTEM, AND VEHICLE", which is incorporated herein by reference in its entirety.

## TECHNICAL FIELD

Embodiments of this application relate to the field of intelligent vehicles, and more specifically, to a sound-making apparatus control method, a sound-making system, and a vehicle.

## BACKGROUND

With improvement of people's living standards, vehicles have become an important means of transportation for people to travel. People like to listen to music and radio, sometimes watch movies, and browse short videos during traveling or waiting. Therefore, sound field effect in the vehicle has become an important factor of concern, and good sound effect can always bring comfortable experience to people.

Currently, a user needs to manually adjust a play intensity of each speaker, to achieve an optimal sound field at a target point position. If a driver needs to manually adjust the play intensity, the driver needs to shift attention to a screen. This is a safety hazard for driving. In addition, when a passenger in the vehicle changes a position or a quantity of passengers increases, speakers need to be continuously adjusted manually. This leads to poor user experience.

## SUMMARY

Embodiments of this application provide a sound-making apparatus control method, a sound-making system, and a vehicle. Position information of an area in which a user is located is obtained for adaptively adjusting a sound field optimization center, to help improve listening experience of the user.

According to a first aspect, a sound-making apparatus control method is provided. The method includes: A first device obtains position information of a plurality of areas in which a plurality of users are located. The first device controls, based on the position information of the plurality of areas and position information of a plurality of sound-making apparatuses, the plurality of sound-making apparatuses to work.

In this embodiment of this application, the first device obtains the position information of the plurality of areas in which the plurality of users are located, and controls, based on the position information of the plurality of areas and the position information of the plurality of sound-making apparatuses, the plurality of sound-making apparatuses to work, without a need for a user to manually adjust the sound-making apparatuses. This helps to reduce learning costs of the user and reduce complicated operations of the user. In addition, this also helps the plurality of users enjoy good listening effect, and helps to improve user experience.

In some possible implementations, the first device may be a sound-making system in a vehicle or a home theater, or a sound-making system in a KTV

In some possible implementations, before that a first device obtains position information of areas in which a plurality of users are located, the method further includes: The first device detects a first operation of a user.

In some possible implementations, the first operation is an operation of the user controlling the first device to play audio content; or the first operation is an operation of the user connecting a second device to the first device and playing audio content on the second device by using the first device; or the first device is an operation of the user enabling a sound field adaptation switch.

With reference to the first aspect, in some implementations of the first aspect, that a first device obtains position information of a plurality of areas in which a plurality of users are located includes: The first device determines, based on collected sensing information, the position information of the areas in which the plurality of users are located. The sensing information may be one or more of image information, sound information, and pressure information. The image information may be collected by an image sensor, for example, a camera apparatus or a radar. The sound information may be collected by a sound sensor, for example, a microphone array. The pressure information may be collected by a pressure sensor, for example, a pressure sensor mounted in a seat. In addition, the sensing information may be data collected by a sensor, or may be information obtained based on data collected by a sensor.

With reference to the first aspect, in some implementations of the first aspect, that a first device obtains position information of a plurality of areas in which a plurality of users are located includes: The first device determines the position information of the plurality of areas based on data collected by the image sensor; or the first device determines the position information of the plurality of areas based on data collected by the pressure sensor; or the first device determines the position information of the plurality of areas based on data collected by the sound sensor.

In this embodiment of this application, based on the position information of the plurality of areas in which the plurality of users are located and the position information of the plurality of sound-making apparatuses, the plurality of sound-making apparatuses are controlled to work. In this way, a calculation process in which the first device controls the plurality of sound-making apparatuses to work can be simplified, and the first device can control the plurality of sound-making apparatuses more conveniently.

In some possible implementations, the image sensor may include a camera, a lidar, and the like.

In some possible implementations, the image sensor may determine whether there is a user in an area by collecting image information in the area and determining, based on the image information, whether the image information includes face contour information, human ear information, iris information, and the like.

In some possible implementations, the sound sensor may include a microphone array.

It should be understood that the sensor may be one sensor or may be a plurality of sensors, where the plurality of sensors may be sensors of a same type, for example, all image sensors. Alternatively, sensing information of a plurality of types of sensors, for example, image information and sound information collected by the image sensor and the sound sensor may be used to determine the user.

In some possible implementations, the position information of the plurality of areas in which the plurality of users are located may include a center point of each of the plurality of areas, or a preset point of each of the plurality of areas, or a point of each area that is obtained according to a preset rule.

With reference to the first aspect, in some implementations of the first aspect, that the first device controls, based on the position information of the plurality of areas and position information of a plurality of sound-making apparatuses, the plurality of sound-making apparatuses to work includes: The first device determines a sound field optimization center point, where distances between the sound field optimization center point and center points of all of the plurality of areas are equal; and the first device controls, based on a distance between the sound field optimization center point and each of the plurality of sound-making apparatuses, each of the plurality of sound-making apparatuses to work.

In this embodiment of this application, before controlling the plurality of sound-making apparatuses to work, the first device may first determine the current sound field optimization center point, and control, based on information about the distance between the sound field optimization center point and the plurality of sound-making apparatuses, the sound-making apparatus to work. This helps the plurality of users enjoy good listening effect, and helps improve user experience.

In some possible implementations, that the first device controls, based on the position information of the plurality of areas and the position information of the plurality of sound-making apparatuses, the plurality of sound-making apparatuses to work includes: controlling, based on the position information of the plurality of areas and a mapping relationship, the plurality of sound-making apparatuses to work, where the mapping relationship is a mapping relationship between positions of the plurality of areas and play intensities of the plurality of sound-making apparatuses.

With reference to the first aspect, in some implementations of the first aspect, the method further includes: The first device notifies position information of the sound field optimization center point.

In this embodiment of this application, the position information of the sound field optimization center point is notified to the user, so that listening effect of the plurality of users is improved and the user is also helped to determine the current sound field optimization center point.

In some possible implementations, that the first device notifies position information of the sound field optimization center point includes: The first device notifies the position information of the sound field optimization center point by using a human-computer interaction interface HMI or a sound.

In some possible implementations, the first device may be a vehicle, and that the first device notifies position information of the sound field optimization center point includes: The vehicle notifies the position information of the sound field optimization center point by using an atmosphere light.

With reference to the first aspect, in some implementations of the first aspect, the plurality of areas are areas in a vehicle cockpit.

With reference to the first aspect, in some implementations of the first aspect, the plurality of areas include a front-row area and a rear-row area.

With reference to the first aspect, in some implementations of the first aspect, the plurality of areas may include a driver area and a front passenger area.

In some possible implementations, the plurality of areas include a driver area, a front passenger area, a second-row left area, and a second-row right area.

In some possible implementations, the first device may be a vehicle, and that a first device obtains position information of a plurality of areas in which a plurality of users are located includes: The vehicle obtains, by using pressure sensors under seats in the areas, the position information of the plurality of areas in which the plurality of users are located.

In some possible implementations, the first device includes a microphone array, and that a first device obtains position information of a plurality of users includes: The first device obtains a voice signal in an environment by using the microphone array; and determines, based on the voice signal, the position information of the plurality of areas in which the plurality of users in the environment are located.

With reference to the first aspect, in some implementations of the first aspect, the method further includes: The first device notifies the position information of the plurality of areas in which the plurality of users are located.

In some possible implementations, that the first device notifies the position information of the plurality of areas in which the plurality of users are located includes: The first device notifies, by using the human-computer interaction interface HMI or the sound, the position information of the plurality of areas in which the plurality of users are located.

In some possible implementations, the first device may be a vehicle, and that the first device notifies the position information of the plurality of areas in which the plurality of users are located includes: The vehicle notifies, by using an atmosphere light, the position information of the plurality of areas in which the plurality of users are located.

With reference to the first aspect, in some implementations of the first aspect, the controlling the plurality of sound-making apparatuses to work includes: adjusting a play intensity of each of the plurality of sound-making apparatuses.

In some possible implementations, the play intensity of each of the plurality of sound-making apparatuses is directly proportional to a distance between each sound-making apparatus and the user.

With reference to the first aspect, in some implementations of the first aspect, the plurality of sound-making apparatuses include a first sound-making apparatus, and that the first device adjusts a play intensity of each of the sound-making apparatuses includes: The first device controls a play intensity of the first sound-making apparatus to be a first play intensity. The method further includes: The first device obtains an instruction of a user to adjust the play intensity of the first sound-making apparatus from the first play intensity to a second play intensity; and the first device adjusts the play intensity of the first sound-making apparatus to the second play intensity in response to obtaining the instruction.

In this embodiment of this application, after adjusting the play intensity of the first sound-making apparatus to the first play intensity, if detecting an operation of the user adjusting the play intensity of the first sound-making apparatus from the first play intensity to the second play intensity, the first device may adjust the play intensity of the first sound-making apparatus to the second play intensity. In this way, the user can quickly adjust the play intensity of the first sound-making apparatus, so that the first sound-making apparatus better meets listening effect of the user.

According to a second aspect, a sound-making system is provided, where the sound-making system includes a sensor, a controller, and a plurality of sound-making apparatuses. The sensor is configured to collect data and send the data to the controller. The controller is configured to obtain, based on the data, position information of a plurality of areas in which a plurality of users are located; and control, based on the position information of the plurality of areas and position information of the plurality of sound-making apparatuses, the plurality of sound-making apparatuses to work.

With reference to the second aspect, in some implementations of the second aspect, the controller is specifically configured to: obtain the position information of the plurality of areas based on data collected by an image sensor; obtain the position information of the plurality of areas based on data collected by a pressure sensor; or obtain the position information of the plurality of areas based on data collected by a sound sensor.

With reference to the second aspect, in some implementations of the second aspect, the controller is specifically configured to: determine a sound field optimization center point, where distances between the sound field optimization center point and center points of all of the plurality of areas are equal; and control, based on a distance between the sound field optimization center point and each of the plurality of sound-making apparatuses, each of the plurality of sound-making apparatuses to work.

With reference to the second aspect, in some implementations of the second aspect, the controller is further configured to send a first instruction to a first prompt apparatus, where the first instruction instructs the first prompt apparatus to notify the position information of the sound field optimization center point.

With reference to the second aspect, in some implementations of the second aspect, the plurality of areas are areas in a vehicle cockpit.

With reference to the second aspect, in some implementations of the second aspect, the plurality of areas include a front-row area and a rear-row area.

With reference to the second aspect, in some implementations of the second aspect, the front-row area includes a driver area and a front passenger area.

With reference to the second aspect, in some implementations of the second aspect, the controller is further configured to send a second instruction to a second prompt apparatus, where the second instruction instructs the second prompt apparatus to notify the position information of the plurality of areas in which the plurality of users are located.

With reference to the second aspect, in some implementations of the second aspect, the controller is specifically configured to adjust a play intensity of each of the plurality of sound-making apparatuses.

With reference to the second aspect, in some implementations of the second aspect, the plurality of sound-making apparatuses include a first sound-making apparatus. The controller is specifically configured to control a play intensity of the first sound-making apparatus to be a first play intensity. The controller is further configured to: obtain a third instruction of the user to adjust the play intensity of the first sound-making apparatus from the first play intensity to a second play intensity, and adjust the play intensity of the first sound-making apparatus to the second play intensity in response to obtaining the third instruction.

According to a third aspect, an electronic apparatus is provided, where the electronic apparatus includes: a transceiver unit, configured to receive sensing information; and a processing unit, configured to obtain, based on the sensing information, position information of a plurality of areas in which a plurality of users are located. The processing unit is further configured to control, based on the position information of the plurality of areas and position information of a plurality of sound-making apparatuses, the plurality of sound-making apparatuses to work.

With reference to the third aspect, in some implementations of the third aspect, that the processing unit is further configured to control, based on the position information of the plurality of areas and the position information of the plurality of sound-making apparatuses, the plurality of sound-making apparatuses to work includes: The processing unit is configured to: determine a sound field optimization center point, where distances between the sound field optimization center point and center points of all of the plurality of areas are equal; and control, based on a distance between the sound field optimization center point and each of the plurality of sound-making apparatuses, each of the plurality of sound-making apparatuses to work.

With reference to the third aspect, in some implementations of the third aspect, the transceiver unit is further configured to send a first instruction to a first prompt unit, where the first instruction instructs the first prompt unit to notify position information of the sound field optimization center point.

With reference to the third aspect, in some implementations of the third aspect, the plurality of areas are areas in a vehicle cockpit.

With reference to the third aspect, in some implementations of the third aspect, the plurality of areas include a front-row area and a rear-row area.

With reference to the third aspect, in some implementations of the third aspect, the plurality of areas include a driver area and a front passenger area.

With reference to the third aspect, in some implementations of the third aspect, the transceiver unit is further configured to send a second instruction to a second prompt unit, where the second instruction instructs the second prompt unit to notify the position information of the plurality of areas in which the plurality of users are located.

With reference to the third aspect, in some implementations of the third aspect, the processing unit is specifically configured to adjust a play intensity of each of the plurality of sound-making apparatuses.

With reference to the third aspect, in some implementations of the third aspect, the plurality of sound-making apparatuses include a first sound-making apparatus. The processing unit is specifically configured to control a play intensity of the first sound-making apparatus to be a first play intensity. The transceiver unit is further configured to receive a third instruction, where the third instruction is an instruction instructing to adjust the play intensity of the first sound-making apparatus from the first play intensity to a second play intensity. The processing unit is further configured to adjust the play intensity of the first sound-making apparatus to the second play intensity.

With reference to the third aspect, in some implementations of the third aspect, the sensing information includes one or more of image information, pressure information, and sound information.

In some possible implementations, the electronic apparatus may be a chip or an in-vehicle apparatus (for example, a controller).

In some possible implementations, the transceiver unit may be an interface circuit.

In some possible implementations, the processing unit may be a processor, a processing apparatus, or the like.

According to a fourth aspect, an apparatus is provided. The apparatus includes units configured to perform the method in any implementation of the first aspect.

According to a fifth aspect, an apparatus is provided. The apparatus includes a processing unit and a storage unit. The storage unit is configured to store instructions, and the processing unit executes the instructions stored in the storage unit, so that the apparatus performs the method in any possible implementation of the first aspect.

Optionally, the processing unit may be a processor, and the storage unit may be a memory. The memory may be a storage unit (for example, a register or a cache) in a chip, or may be a storage unit (for example, a read-only memory, or a random access memory) located outside the chip in a vehicle.

According to a sixth aspect, a system is provided. The system includes a sensor and an electronic apparatus. The electronic apparatus may be the electronic apparatus according to any possible implementation of the third aspect.

With reference to the sixth aspect, in some implementations of the sixth aspect, the system further includes a plurality of sound making apparatuses.

According to a seventh aspect, a system is provided. The system includes a plurality of sound-making apparatuses and an electronic apparatus, where the electronic apparatus may be the electronic apparatus according to any possible implementation of the third aspect.

With reference to the seventh aspect, in some implementations of the seventh aspect, the system further includes a sensor.

According to an eighth aspect, a vehicle is provided, where the vehicle includes the sound-making system according to any one of the possible implementations of the second aspect, or the vehicle includes the electronic apparatus according to any one of the possible implementations of the third aspect, or the vehicle includes the apparatus according to any possible implementation of the fourth aspect, or the vehicle includes the apparatus according to any possible implementation of the fifth aspect, or the vehicle includes the system according to any possible implementation of the sixth aspect, or the vehicle includes the system according to any possible implementation of the seventh aspect.

According to a ninth aspect, a computer program product is provided. The computer program product includes computer program code, and when the computer program code is run on a computer, the computer is enabled to perform the method according to the first aspect.

It should be noted that all or some of the computer program code may be stored in a first storage medium. The first storage medium may be encapsulated together with a processor, or may be encapsulated separately from a processor. This is not specifically limited in this embodiment of this application.

According to a tenth aspect, a computer-readable medium is provided. The computer-readable medium stores program code, and when the computer program code is run on a computer, the computer is enabled to perform the method according to the first aspect.

**BRIEF DESCRIPTION OF DRAWINGS**

FIG. 1 is a schematic functional block diagram of a vehicle according to an embodiment of this application;

FIG. 2 is a schematic diagram of a structure of a sound-making system according to an embodiment of this application;

FIG. 3 is a schematic diagram of another structure of a sound-making system according to an embodiment of this application;

FIG. 4 is a top view of a vehicle;

FIG. 5 is a schematic flowchart of a sound-making apparatus control method according to an embodiment of this application;

FIG. 6 is a schematic diagram of positions of four speakers in a vehicle cockpit;

FIG. 7 is a schematic diagram of a sound field optimization center of speakers in a vehicle when there are users in a driver seat, a front passenger seat, a second-row left area, and a second-row right area according to an embodiment of this application;

FIG. 8 is a schematic diagram of displaying a sound field optimization center on a large central control screen of a vehicle according to an embodiment of this application;

FIG. 9 is a schematic diagram of a sound field optimization center of speakers in a vehicle when there are users in a driver seat, a front passenger seat, and a second-row left area according to an embodiment of this application;

FIG. 10 is another schematic diagram of displaying a sound field optimization center on a large central control screen of a vehicle according to an embodiment of this application;

FIG. 11 is another schematic diagram of displaying a sound field optimization center on a large central control screen of a vehicle according to an embodiment of this application;

FIG. 12 is another schematic diagram of displaying a sound field optimization center on a large central control screen of a vehicle according to an embodiment of this application;

FIG. 13 is a schematic diagram of a sound field optimization center of speakers in a vehicle when there are users in a driver seat and a second-row left area according to an embodiment of this application;

FIG. 14 is another schematic diagram of displaying a sound field optimization center on a large central control screen of a vehicle according to an embodiment of this application;

FIG. 15 is another schematic diagram of displaying a sound field optimization center on a large central control screen of a vehicle according to an embodiment of this application;

FIG. 16 is a schematic diagram of a sound field optimization center in a vehicle when there are users in a driver seat and a front passenger seat according to an embodiment of this application;

FIG. 17 is another schematic diagram of displaying a sound field optimization center on a large central control screen of a vehicle according to an embodiment of this application;

FIG. 18 is another schematic diagram of displaying a sound field optimization center on a large central control screen of a vehicle according to an embodiment of this application;

FIG. 19 is a schematic diagram of a sound field optimization center in a vehicle when there are users in a driver seat and a second-row left area according to an embodiment of this application;

FIG. 20 is another schematic diagram of displaying a sound field optimization center on a large central control screen of a vehicle according to an embodiment of this application;

FIG. 21 is another schematic diagram of displaying a sound field optimization center on a large central control screen of a vehicle according to an embodiment of this application;

FIG. 22 is a schematic diagram of a sound field optimization center in a vehicle when there is a user in a driver seat according to an embodiment of this application;

FIG. 23 is another schematic diagram of displaying a sound field optimization center on a large central control screen of a vehicle according to an embodiment of this application;

FIG. 24 is another schematic diagram of displaying a sound field optimization center on a large central control screen of a vehicle according to an embodiment of this application;

FIG. 25 is another schematic diagram of displaying a sound field optimization center on a large central control screen of a vehicle according to an embodiment of this application;

FIG. 26 is another schematic diagram of displaying a sound field optimization center on a large central control screen of a vehicle according to an embodiment of this application;

FIG. 27 shows a group of graphic user interfaces GUIs according to an embodiment of this application;

FIG. 28 shows another group of GUIs according to an embodiment of this application;

FIG. 29 is a schematic diagram in which a sound-making apparatus control method is applied to a home theater according to an embodiment of this application;

FIG. 30 is a schematic diagram of a sound field optimization center in a home theater according to an embodiment of this application;

FIG. 31 is another schematic flowchart of a sound-making apparatus control method according to an embodiment of this application;

FIG. 32 is a schematic diagram of a structure of a sound-making system according to an embodiment of this application; and

FIG. 33 is a schematic block diagram of an apparatus according to an embodiment of this application.

## DESCRIPTION OF EMBODIMENTS

The following describes technical solutions of this application with reference to accompanying drawings.

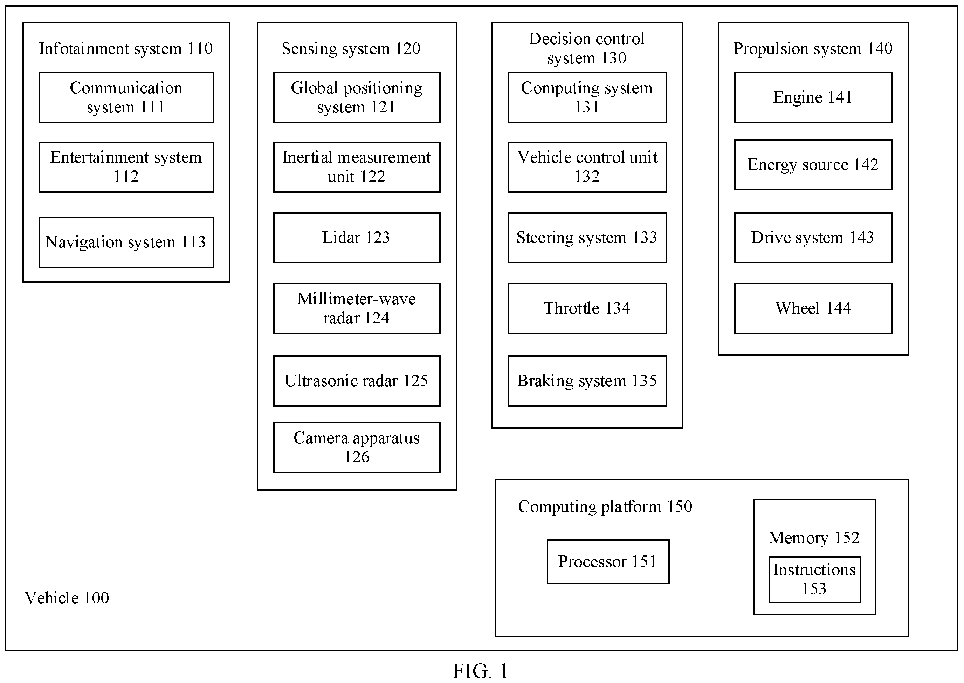

FIG. 1 is a schematic functional block diagram of a vehicle 100 according to an embodiment of this application. The vehicle 100 may be configured to be in a full or partial automatic driving mode. For example, the vehicle 100 may obtain environment information around the vehicle 100 by using a sensing system 120, and obtain an autonomous driving policy based on analysis of the ambient environment information, to implement full-autonomous driving, or present an analysis result to a user, to implement partial autonomous driving.

The vehicle 100 may include various subsystems, such as an infotainment system 110, a sensing system 120, a decision control system 130, a propulsion system 140, and a computing platform 150. Optionally, the vehicle 100 may include more or fewer subsystems, and each subsystem may include a plurality of components. In addition, each subsystem and component of the vehicle 100 may be interconnected in a wired or wireless manner.

In some embodiments, the infotainment system 110 may include a communication system 111, an entertainment system 112, and a navigation system 113.

The communication system 111 may include a wireless communication system, and the wireless communication system may communicate with one or more devices in wireless manner directly or by using a communication network. For example, the wireless communication system 146 may use a third generation (3rd generation, 3G) cellular communication, for example, code division multiple access (code division multiple access, CDMA), evolution data optimized (evolution data optimized, EVDO), a global system for mobile communication (global system for mobile communication, GSM), or a general packet radio service (general packet radio service, GPRS); or a fourth generation (4th generation, 4G) cellular communication, for example, long term evolution (long term evolution, LTE); or a fifth generation (5th generation, 5G) cellular communication. The wireless communication system may communicate with a wireless local area network (wireless local area network, WLAN) through Wi-Fi. In some embodiments, the wireless communication system 146 may directly communicate with a device by using an infrared link, Bluetooth, or ZigBee. As for various vehicle communication systems in other wireless protocols, for example, the wireless communication system may include one or more dedicated short range communications (dedicated short range communications, DSRC) devices, and these devices may include public and/or private data communication between vehicles and/or roadside stations.

The entertainment system 112 may include a central control screen, a microphone, and a sound box. A user may listen to radio and play music in a vehicle through the entertainment system. Alternatively, a mobile phone is connected to a vehicle, to realize screen projection of the mobile phone on the central control screen. The central control screen may be a touchscreen, and the user may perform an operation by touching the screen. In some cases, a voice signal of the user may be obtained by using the microphone, and some control performed by the user on the vehicle 100 is implemented based on analysis of the voice signal of the user, for example, a temperature inside the vehicle is adjusted. In other cases, music may be played for the user by using the sound box.

The navigation system 113 may include a map service provided by a map supplier, to provide navigation of a driving route for the vehicle 100. The navigation system 113 may be used together with a global positioning system 121 and an inertial measurement unit 122 of the vehicle. The map service provided by the map provider may be a two-dimensional map or a high-precision map.

The sensing system 120 may include several types of sensors that sense the ambient environment information of the vehicle 100. For example, the sensing system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The sensing system 120 may further include sensors (for example, an in-vehicle air quality monitor, a fuel gauge, and an oil temperature gauge) of an internal system of the vehicle 100 that is monitored. Sensor data from one or more of these sensors can be used to detect an object and corresponding features (a position, a shape, a direction, a speed, and the like) of the object. Such detection and recognition are key functions of a safe operation of the vehicle 100.

The global positioning system 121 may be configured to estimate a geographical position of the vehicle 100.

The inertial measurement unit 122 is configured to sense a position and an orientation change of the vehicle 100 based on an inertial acceleration. In some embodiments, the inertial measurement unit 122 may be a combination of an accelerometer and a gyroscope.

The lidar 123 may sense, by using a laser, an object in an environment in which the vehicle 100 is located. In some embodiments, the lidar 123 may include one or more laser sources, a laser scanner, one or more detectors, and other system components.

The millimeter-wave radar 124 may sense an object in an ambient environment of the vehicle 100 by using a radio signal. In some embodiments, in addition to sensing an object, the radar 126 may further be configured to sense a speed and/or a moving direction of the object.

The ultrasonic radar 125 may sense an object around the vehicle 100 by using an ultrasonic signal.

The camera apparatus 126 may be configured to capture image information of the ambient environment of the vehicle 100. The camera apparatus 126 may include a monocular camera device, a binocular camera device, a structured light camera device, a panorama camera device, and the like. The image information obtained by using the camera apparatus 126 may include a static image, or may include video stream information.

The decision control system 130 includes a computing system 131 that performs analysis and decision-making based on information obtained by the sensing system 120. The decision control system 130 further includes a vehicle control unit 132 that controls a power system of the vehicle 100, and a steering system 133, a throttle 134, and a braking system 135 that are configured to control the vehicle 100.

The computing system 131 may operate to process and analyze various information obtained by the sensing system 120 to identify a target, an object, and/or a feature in the ambient environment of the vehicle 100. The target may include a pedestrian or an animal, and the object and/or the feature may include a traffic signal, a road boundary, and an obstacle. The computing system 131 may use technologies such as an object recognition algorithm, a structure from motion (structure from motion, SFM) algorithm, and video tracking. In some embodiments, the computing system 131 may be configured to: map an environment, track an object, estimate a speed of an object, and the like. The computing system 131 may analyze the obtained various information and obtain a control policy for the vehicle.

The vehicle control unit 132 may be configured to coordinate and control a power battery and an engine 141 of the vehicle, to improve power performance of the vehicle 100.

The steering system 133 may be operated to adjust a moving direction of the vehicle 100. For example, in an embodiment, the steering system 133 may be a steering wheel system.

The throttle 134 is configured to control an operating speed of the engine 141 and control a speed of the vehicle 100.

The braking system 135 is configured to control the vehicle 100 to decelerate. The braking system 135 may slow down a wheel 144 by using a friction force. In some embodiments, the braking system 135 may convert kinetic energy of the wheel 144 into a current. The braking system 135 may also slow down a rotation speed of the wheel 144 by using other forms, to control the speed of the vehicle 100.

The propulsion system 140 may include a component that provides power for the vehicle 100 to move. In an embodiment, the propulsion system 140 may include the engine 141, an energy source 142, a drive system 143, and the wheel 144. The engine 141 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The engine 141 converts the energy source 142 into mechanical energy.

Examples of the energy source 142 include gasoline, diesel, other oil-based fuels, propane, other compressed gas-based fuels, ethyl alcohol, solar panels, batteries, and other power sources. The energy source 142 may also provide energy for another system of the vehicle 100.

The drive apparatus 143 may transmit mechanical power from the engine 141 to the wheel 144. The drive apparatus 143 may include a gearbox, a differential, and a drive shaft. In an embodiment, the drive apparatus 143 may further include another component, for example, a clutch. The drive shaft may include one or more shafts that may be coupled to one or more wheels 121.

Some or all functions of the vehicle 100 are controlled by the computing platform 150. The computing platform 150 may include at least one processor 151, and the processor 151 may execute instructions 153 stored in a non-transitory computer-readable medium such as a memory 152. In some embodiments, the computing platform 150 may alternatively be a plurality of computing devices that control individual components or subsystems of the vehicle 100 in a distributed manner.

The processor 151 may be any conventional processor, such as a commercially available CPU. Alternatively, the processor 151 may further include an image processor (graphic process unit, GPU), a field programmable gate array (field programmable gate array, FPGA), a system on chip (system on chip, SOC), an application-specific integrated circuit (application-specific integrated circuit, ASIC) or a combination thereof. Although FIG. 1 functionally illustrates a processor, a memory, and other components of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Thus, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the memory 152 may include the instructions 153 (for example, program logics), and the instructions 153 may be executed by the processor 151 to perform various functions of the vehicle 100. The memory 152 may also include additional instructions, including instructions used to send data to, receive data from, interact with, and/or control one or more of the infotainment system 110, the sensing system 120, the decision control system 130, and the propulsion system 140.

In addition to the instructions 153, the memory 152 may further store data, such as a road map, route information, a position, a direction, a speed, and other vehicle data of the vehicle, and other information. This information may be used by the vehicle 100 and the computing platform 150 during operation of the vehicle 100 in autonomous, semi-autonomous, and/or manual modes.

The computing platform 150 may control the functions of the vehicle 100 based on inputs received from various subsystems (for example, the propulsion system 140, the sensing system 120, and the decision control system 130). For example, the computing platform 150 may utilize an input from the decision control system 130 to control the steering system 133 to avoid obstacles detected by the sensing system 120. In some embodiments, the computing platform 150 may operate to provide control over many aspects of the vehicle 100 and the subsystems of the vehicle 100.

Optionally, one or more of the foregoing components may be installed separately from or associated with the vehicle 100. For example, the memory 152 may be partially or completely separated from the vehicle 100. The foregoing components may be communicatively coupled together in a wired and/or wireless manner.

Optionally, the foregoing component is merely an example. During actual application, components in the foregoing modules may be added or removed based on an actual requirement. FIG. 1 should not be construed as a limitation on this embodiment of this application.

An autonomous driving vehicle traveling on a road, for example, the vehicle 100, may identify an object in an ambient environment of the autonomous driving vehicle, to determine to adjust a current speed. The object may be another vehicle, a traffic control device, or another type of object. In some examples, each identified object may be considered independently, and a feature of each object, such as a current speed of the object, an acceleration of the object, and an interval between the object and the vehicle may be used to determine a speed to be adjusted by the autonomous driving vehicle.

Optionally, the vehicle 100 or a sensing and computing device (for example, the computing system 131 and the computing platform 150) associated with the vehicle 100 may predict behavior of the identified object based on the features of the identified object and a state of the ambient environment (for example, traffic, rain, and ice on the road). Optionally, all identified objects depend on behavior of each other, and therefore all the identified objects may be considered together to predict behavior of a single identified object. The vehicle 100 can adjust the speed of the vehicle 100 based on the predicted behavior of the identified object. In other words, the autonomous driving vehicle can determine, based on the predicted behavior of the object, a stable state to which the vehicle needs to be adjusted (for example, acceleration, deceleration, or stop). In this process, another factor may also be considered to determine the speed of the vehicle 100, for example, a horizontal position of the vehicle 100 on a road on which the vehicle drives, curvature of the road, and proximity between a static object and a dynamic object.

In addition to providing an instruction for adjusting the speed of the autonomous driving vehicle, the computing device may further provide an instruction for modifying a steering angle of the vehicle 100, so that the autonomous driving vehicle follows a given track and/or maintains safe lateral and longitudinal distances between the autonomous driving vehicle and an object (for example, a car in an adjacent lane on the road) near the autonomous driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

With improvement of people's living standard, vehicles have become an important means of transportation for people to travel. People like to listen to music and radio, and sometimes watch movies and browse short videos while driving or waiting. Therefore, sound field effect in the vehicle has become an important factor of concern, and good sound effect can always bring comfortable experience to people.

Currently, a user needs to manually adjust a play intensity of each speaker, so as to achieve an optimal sound field at a target point position. If a driver needs to manually adjust the play intensity, the driver needs to shift focus to a screen. This is a safety hazard for driving. In addition, when a passenger in the vehicle changes a position or a quantity of passengers increases, play intensities of speakers need to be continuously manually adjusted. This leads to poor user experience.

Embodiments of this application provide a sound-making apparatus control method, a sound-making system, and a vehicle. Position information of an area in which a user is located is identified, and a sound field optimization center is automatically adjusted, so that each user can achieve good listening effect.

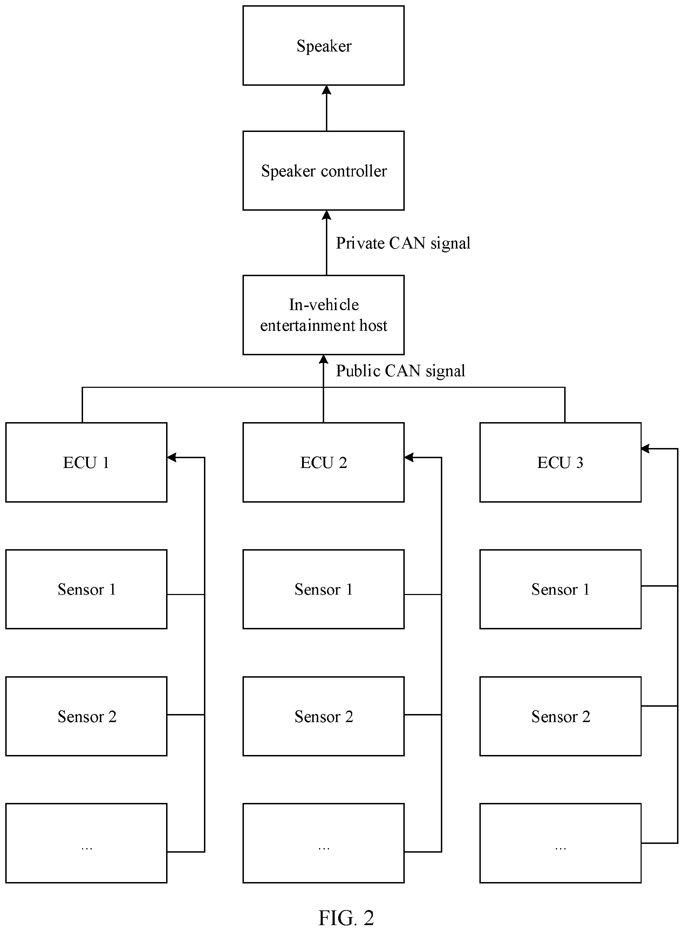

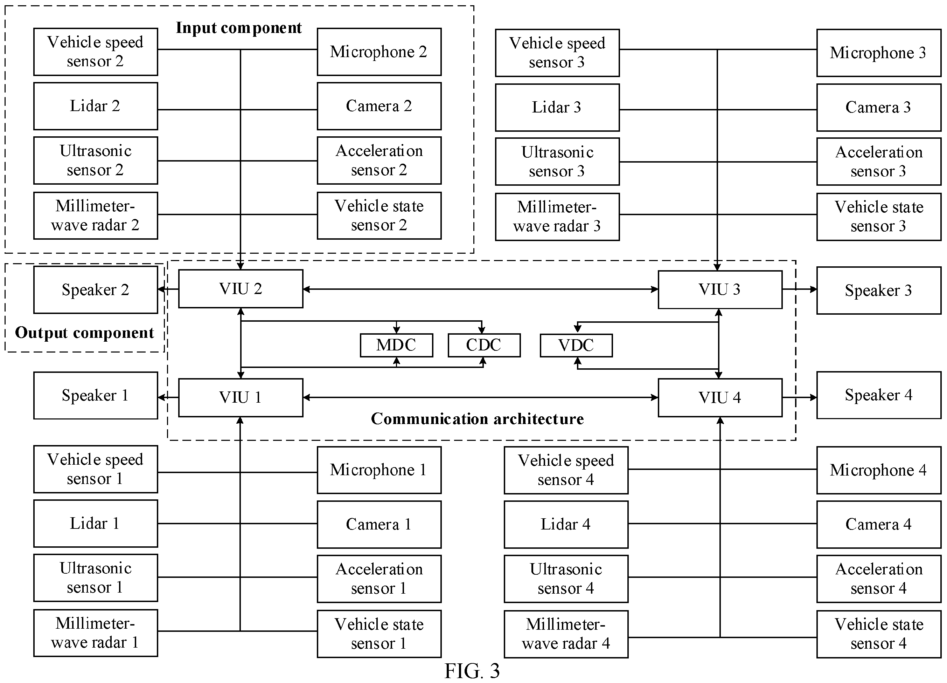

The following describes an in-vehicle sound-making system provided in an embodiment of this application by using FIG. 2 and FIG. 3. FIG. 2 is a schematic diagram of a structure of a sound-making system according to an embodiment of this application. The sound-making system may be a controller area network (controller area network, CAN) control system. The CAN control system may include a plurality of sensors (such as a sensor 1 and a sensor 2), a plurality of electronic control units (electronic control unit, ECU), an in-vehicle entertainment host, a speaker controller, and a speaker. The sensor includes but is not limited to a camera, a microphone, an ultrasonic radar, a millimeter-wave radar, a lidar, a vehicle speed sensor, a motor power sensor, and an engine speed sensor. The ECU is configured to receive data collected by the sensor, execute a corresponding command, and obtain a periodic signal or an event signal after executing the corresponding command. Then, the ECU may send these signals to a public CAN network, where the ECU includes but is not limited to a complete vehicle controller, a hybrid controller, an automatic transmission controller, and an automatic driving controller. The in-vehicle entertainment host is configured to capture a periodic signal or an event signal sent by each ECU on the public CAN network, and perform a corresponding operation or forward the signal to the speaker controller when the corresponding signal is recognized. The speaker controller is used to receive the command signal from the in-vehicle entertainment host on the private CAN network to adjust the speaker. For example, in this embodiment of this application, the in-vehicle entertainment host may capture, from the CAN bus, image information collected by the camera. The in-vehicle entertainment host may determine, based on image information, whether there are users in a plurality of areas in the vehicle, and send position information of the user to the speaker controller. The speaker controller may control a play intensity of each speaker based on the position information of the user.

FIG. 3 is a schematic diagram of another structure of an in-vehicle sound-making system according to an embodiment of this application. The sound-making system may be a ring network communication architecture. All sensors and actuators (such as components like a speaker, an atmosphere light, an air conditioner, and a motor that obtain and execute a command) may be connected to a nearby vehicle integration unit (vehicle integration unit, VIU). As a communication interface unit, the VIU may be deployed at a position in which sensors and actuators of a vehicle are dense, so that the sensors and the actuators of the vehicle can perform nearby connection. In addition, the VIU may have specific computing and driving capabilities (for example, the VIU may absorb driving computing functions of some actuators). The sensor includes but is not limited to a camera, a microphone, an ultrasonic radar, a millimeter-wave radar, a lidar, a vehicle speed sensor, a motor power sensor, an engine rotation speed sensor, and the like.

VIUs communicate with each other through networking. An intelligent driving computing platform/a mobile data center (mobile data center, MDC), a vehicle domain controller (vehicle domain controller, VDC), and an intelligent cockpit domain controller (cockpit domain controller, CDC) are separately and redundantly connected to the ring network communication network formed by the VIUs. After the sensor (for example, the camera) collects data, the sensor may send the collected data to the VIU. The VIU can publish the data to the ring network. The MDC, VDC, and CDC collect the related data on the ring network, calculate the data, convert the data into a signal including position information of a user, and publish the signal to the ring network. A play intensity of a speaker is controlled through a corresponding computing capability and driving capability in the VIU.

It should be understood that, as shown in FIG. 3, there may be a correspondence between different VIUs and speakers at different positions. For example, a VIU 1 is configured to drive a speaker 1, a VIU 2 is configured to drive a speaker 2, a VIU 3 is configured to drive a speaker 3, and a VIU 4 is configured to drive a speaker 4. An arrangement of the VIU may be independent of the speaker. For example, the VIU 1 may be arranged at the left rear of the vehicle, but the speaker 1 may be arranged near a door on a driver side. The sensor or actuator can be connected to the nearby VIU, thereby reducing cable bundles. Due to a limited quantity of interfaces of the MDC, VDC, and CDC, the VIU can be connected a plurality of sensors and a plurality of actuators to implement interface and communication functions.

It should be further understood that, in this embodiment of this application, a VIU to which the sensor or a controller is connected and a controller by which the connection is controlled may be set before delivery of the sound-making system, or may be defined by the user, and hardware of the sound-making system may be replaced and upgraded.

It should be further understood that the VIU may absorb driving computing functions of some sensors and actuators. In this way, when some actuators (for example, a CDC or a VDC) are faulty, the VIU may directly process the data collected by the sensor, to further control the actuators.

In an embodiment, the communication architecture shown in FIG. 3 may be an intelligent digital vehicle platform (intelligent digital vehicle platform, IDVP) ring network communication architecture.

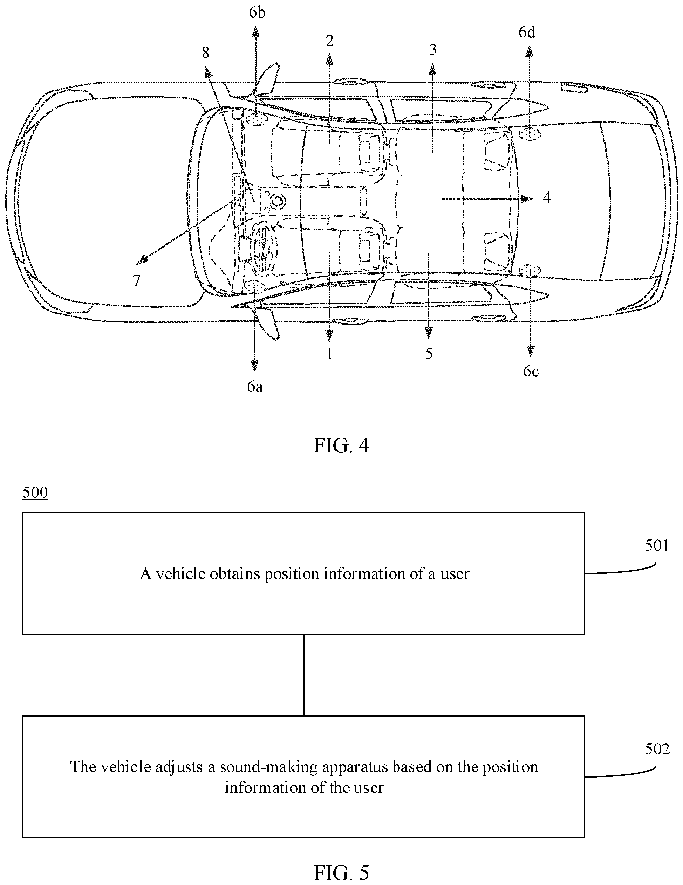

FIG. 4 is a top view of a vehicle. As shown in FIG. 4, a position 1 is a driver seat, a position 2 is a front passenger seat, positions 3 to 5 are rear-row areas, positions 6a to 6d are positions of four speakers in the vehicle, a position 7 is a position of an in-vehicle camera, and a position 8 is a position where a CDC and an in-vehicle central control screen are located. The speaker may be configured to play a media sound in the vehicle. The in-vehicle camera may be used to detect a position of a passenger in the vehicle. The in-vehicle central control screen may be used to display image information and an interface of an application. The CDC is used to connect peripherals and provide data analysis and processing capabilities.

It should be understood that in FIG. 4, only an example in which the speakers shown in the positions 6a to 6d are located near a door of the driver seat, near a door of the front passenger seat, near a door of a second-row left area, and near a door of the second-row right area is used for description. In this embodiment of this application, positions of the speakers are not specifically limited. The speakers can alternatively be located near the vehicle doors, near the large central control screen, on a ceiling, on floors, or on seats (for example, on pillows of the seats).

FIG. 5 is a schematic flowchart of a sound-making apparatus control method 500 according to an embodiment of this application. The method 500 may be applied to a vehicle, the vehicle includes a plurality of sound-making apparatuses (for example, speakers), and the method 500 includes the following steps.

S501: The vehicle obtains position information of a user.

In an embodiment, the vehicle may obtain image information of each area (for example, a driver seat, a front passenger seat, and a rear-row area) in the vehicle by starting an in-vehicle camera, and determine, based on the image information of each area, whether there is a user in the area. For example, the vehicle may analyze, based on the image information collected by the camera, whether the image information includes an outline of a human face, so that the vehicle may determine whether there is a user in the area. For another example, the vehicle may analyze, based on the image information collected by the camera, whether the image information includes iris information of a human eye, so that the vehicle may determine that there is a user in the area.

In an embodiment, when the vehicle detects an operation of turning on a sound field adaptation switch by the user, the vehicle may start the camera to obtain the image information of each area in the vehicle.

For example, the user may select a setting option on a large central control screen to enter a sound effect function interface, and may choose to enable the sound field adaptation switch on the sound effect function interface.

In an embodiment, the vehicle may alternatively detect, by using a pressure sensor under a seat, whether there is a user in a current area. For example, when a pressure value detected by a pressure sensor under a seat in an area is greater than or equal to a preset value, it may be determined that there is a user in the area.

In an embodiment, the vehicle may alternatively determine position information of a sound source by using audio information obtained by a microphone array, to determine specific areas in which there are users.

In an embodiment, the vehicle may alternatively obtain the position information of the user in the vehicle by using one or a combination of the in-vehicle camera, the pressure sensor, and the microphone array.

It should be understood that in this embodiment of this application, data collected by the sensor (for example, the in-vehicle camera, the pressure sensor, or the microphone array) can be transmitted to a CDC, and the CDC can process the data to determine specific areas in which there are users.

For example, after processing the data, the CDC may convert the data into a flag bit. For example, the CDC may output 1000 when there is a user in only the driver seat. The CDC may output 0100 when there is a user in only the front passenger seat. The CDC may output 0010 when there is a user in only a second-row left area. The CDC may output 1100 when there are users in both the driver seat and the front passenger seat. The CDC may output 1110 when there are users in the driver seat, the front passenger seat, and the second-row left area.

It should be understood that a manner of outputting the position information by the CDC is merely described by using the flag bit as an example. This embodiment of this application is not limited thereto.

It should be further understood that the foregoing description uses an example in which sitting areas of the users in the vehicle are divided into the driver seat, the front passenger seat, the second-row left area, and the second-row right area. This embodiment of this application is not limited thereto. For example, areas in the vehicle may alternatively be divided into a driver seat, a front passenger seat, a second-row left area, a second-row middle area, and a second-row right area. For another example, for a 7-seat SUV, areas in the vehicle may alternatively be divided into a driver seat, a front passenger seat, a second-row left area, a second-row right area, a third-row left area, and a third-row right area. For another example, for a passenger car, areas in the vehicle may be divided into a front-row area and a rear-row area. Alternatively, for a multi-passenger car, areas in the vehicle may be divided into a driving area, a passenger area, and the like.

S502: The vehicle adjusts a sound-making apparatus based on the position information of the user.

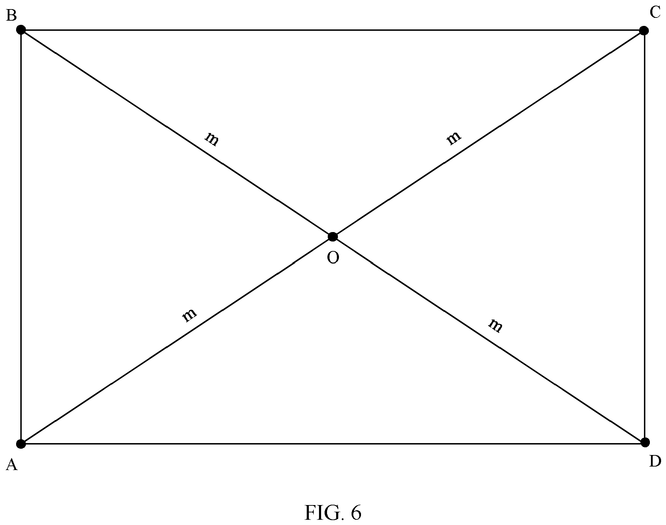

For example, an example in which the sound-making apparatus is a speaker is used for description with reference to the speakers 6a to 6d in FIG. 2. FIG. 6 shows positions of the four speakers. For example, a graph formed by connection lines of points at which the four speakers are located is a rectangle ABCD. A speaker 1 is disposed at a point A on the rectangle ABCD, a speaker 2 is disposed at a point B, a speaker 3 is disposed at a point C, and a speaker 4 is disposed at a point D. A point O is a center point of the rectangle ABCD (distances between the point O and the four points A, B, C, and D are equal). It should be understood that different automobiles have different positions and different quantities of speakers. In a specific implementation process, a specific adjustment manner may be designed based on a model of an automobile or a setting of a speaker in an automobile. This is not limited in this application.

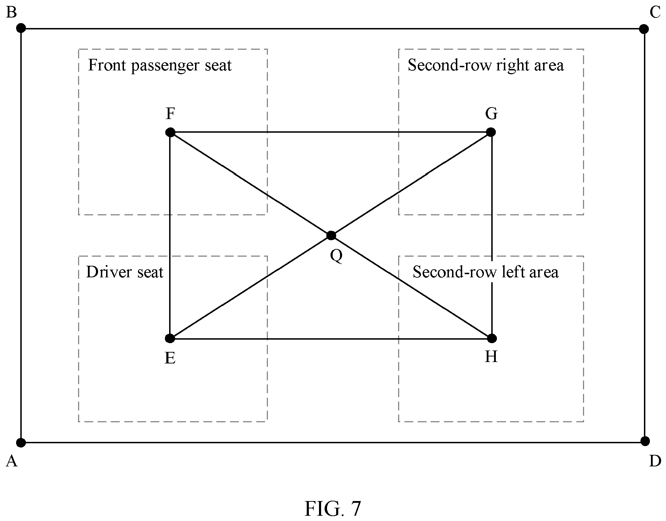

FIG. 7 is a schematic diagram of a sound field optimization center of speakers in a vehicle when there are users in a driver seat, a front passenger seat, a second-row left area, and a second-row right area according to an embodiment of this application. Center points of all the areas may form a rectangular EFGH, and a center point of the rectangular EFGH may be a point Q. The point Q may be a current sound field optimization center point in the vehicle.

For example, the point Q may coincide with the point O. Since distances between the center point Q of the rectangular EFGH and the four speakers are equal, the vehicle can control play intensities of the four speakers to be the same (for example, the play intensities of the four speakers are all p).

For example, if the point Q and the point O do not overlap, the vehicle may control the play intensities of the four speakers based on the distances between the point Q and the four speakers.

For example, for the speaker 1 (located at the point A), the vehicle may control a play intensity of the speaker 1 to be $\dfrac{AQ}{AO} \bullet p$.

For another example, for the speaker 2 (located at the point B), the vehicle may control a play intensity of the speaker 2 to be $\dfrac{BQ}{AO} \bullet p$.

For another example, for the speaker 3 (located at the point C), the vehicle may control a play intensity of the speaker 3 to be $\dfrac{CQ}{AO} \bullet p$.

For another example, for the speaker 4 (located at the point D), the vehicle may control a play intensity of the speaker 4 to be $\dfrac{DQ}{AO} \bullet p$.

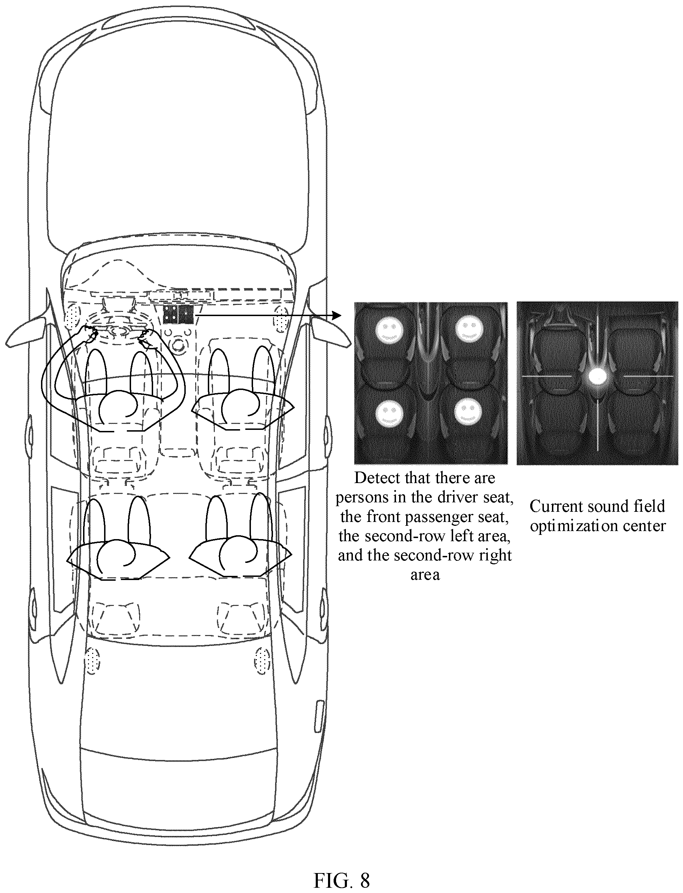

FIG. 8 is a schematic diagram of displaying a sound field optimization center on a large central control screen of a vehicle according to an embodiment of this application. When the vehicle detects that there are users in a driver seat, a front passenger seat, a second-row left area, and a second-row right area in the vehicle, the large central control screen may notify a user that "Detect that there are persons in the driver seat, the front passenger seat, the second-row left area, and the second-row right area", and notify the user that a current sound field optimization center point may be a point having equal distances with a center point of an area in which the driver seat is located, a center point of an area in which the front passenger seat is located, a center point of the second-row left area, and a center point of the second-row right area.

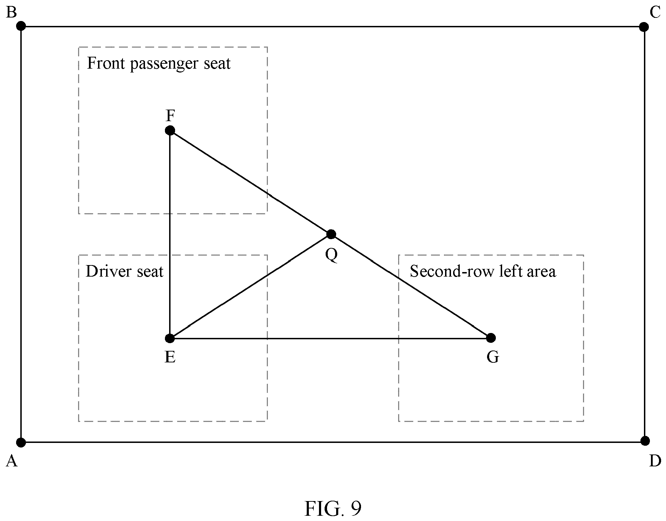

FIG. 9 is a schematic diagram of a sound field optimization center of speakers in a vehicle when there are users in a driver seat, a front passenger seat, and a second-row left area according to an embodiment of this application. Center points of the driver seat, the front passenger seat, and the second-row left area may form a triangle EFG, where a circumcenter of the triangle EFG may be a point Q. The point Q may be a current sound field optimization center point in the vehicle.

For example, the point Q may coincide with the point O. Since distances between the center point Q of the rectangular EFGH and the four speakers are equal, the vehicle can control play intensities of the four speakers to be the same (for example, the play intensities of the four speakers are all p).

For example, the point Q and the point O may not overlap. In this case, for a manner in which the vehicle controls the play intensities of the four speakers, refer to the description in the foregoing embodiment. Details are not described herein again.

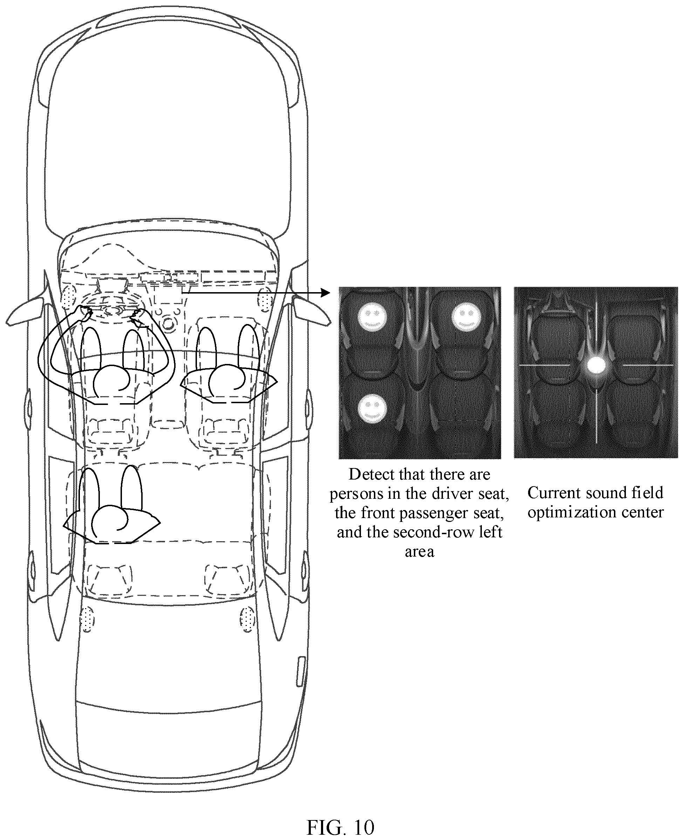

FIG. 10 is a schematic diagram of displaying a sound field optimization center on a large central control screen of a vehicle according to an embodiment of this application. When the vehicle detects that there are users in a driver seat, a front passenger seat, and a second-row left area in the vehicle, the large central control screen may notify a user that "Detect that there are persons in the driver seat, the front passenger seat, and the second-row left area", and notify the user that a current sound field optimization center point may be a point having equal distances with a center point of an area in which the driver seat is located, a center point of an area in which the front passenger seat is located, and a center point of the second-row left area.

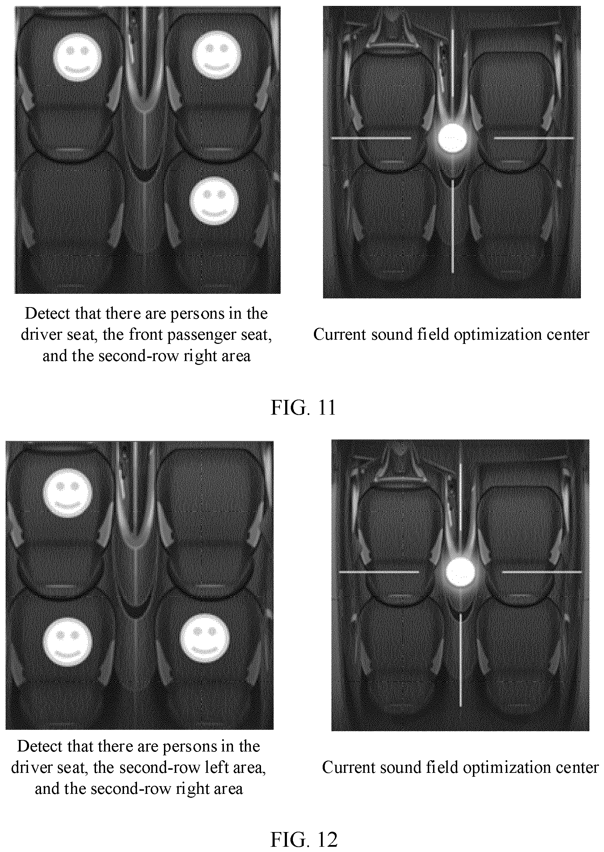

FIG. 11 is a schematic diagram of displaying a sound field optimization center on a large central control screen of a vehicle according to an embodiment of this application. When the vehicle detects that there are users in a driver seat, a front passenger seat, and a second-row right area in the vehicle, the large central control screen may notify a user that "Detect that there are persons in the driver seat, the front passenger seat, and the second-row right area", and notify the user that a current sound field optimization center point may be a point having equal distances with a center point of an area in which the driver seat is located, a center point of an area in which the front passenger seat is located, and a center point of the second-row right area.

FIG. 12 is a schematic diagram of displaying a sound field optimization center on a large central control screen of a vehicle according to an embodiment of this application. When the vehicle detects that there are users in a driver seat, a second-row left area and a second-row right area in the vehicle, the large central control screen may notify a user that "Detect that there are persons in the driver seat, the second-row left area, and the second-row right area", and notify the user that a current sound field optimization center point may be a point having equal distances with a center point of an area in which the driver seat is located, a center point of the second-row left area, and a center point of the second-row right area.

It should be understood that when there are users in the driver seat, the front passenger seat, and the second-row right area, or when there are users in the driver seat, the second-row left area, and the second-row right area, for a manner in which the vehicle controls play intensities of four speakers, reference may be made to the foregoing manner in which the vehicle controls the play intensities of the four speakers when there are users in the driver seat, the front passenger seat, and the second-row left area. Details are not described herein again.

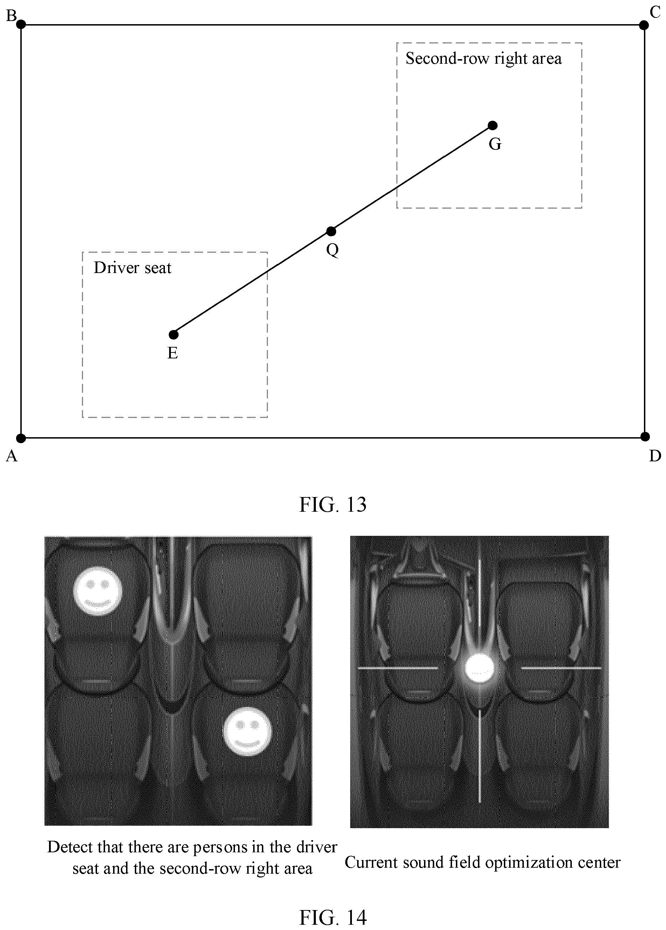

FIG. 13 is a schematic diagram of a sound field optimization center of speakers in a vehicle when there are users in a driver seat and a second-row left area according to an embodiment of this application. A connection line between a center point of the driver seat and a center point of the second-row left area is EG, where a midpoint of EG may be a point Q. The point Q may be a current sound field optimization center point in the vehicle.

For example, the point Q may coincide with the point O. Since distances between the midpoint of the line segment EH and the four speakers are equal, the vehicle can control play intensities of the four speakers to be the same (for example, the play intensities of the four speakers are all p).

For example, if the point Q and the point O do not overlap, the vehicle may control the play intensities of the four speakers based on the distances between the point Q and the four speakers. For a specific control process, refer to the description of the foregoing embodiment. Details are not described herein again.

FIG. 14 is a schematic diagram of displaying a sound field optimization center on a large central control screen of a vehicle according to an embodiment of this application. When the vehicle detects that there are users in a driver seat and a second-row right area in the vehicle, the large central control screen may notify a user that "Detect that there are persons in the driver seat and the second-row right area", and notify the user that a current sound field optimization center point may be a point having equal distances with a center point of an area in which the driver seat is located and a center point of the second-row right area.

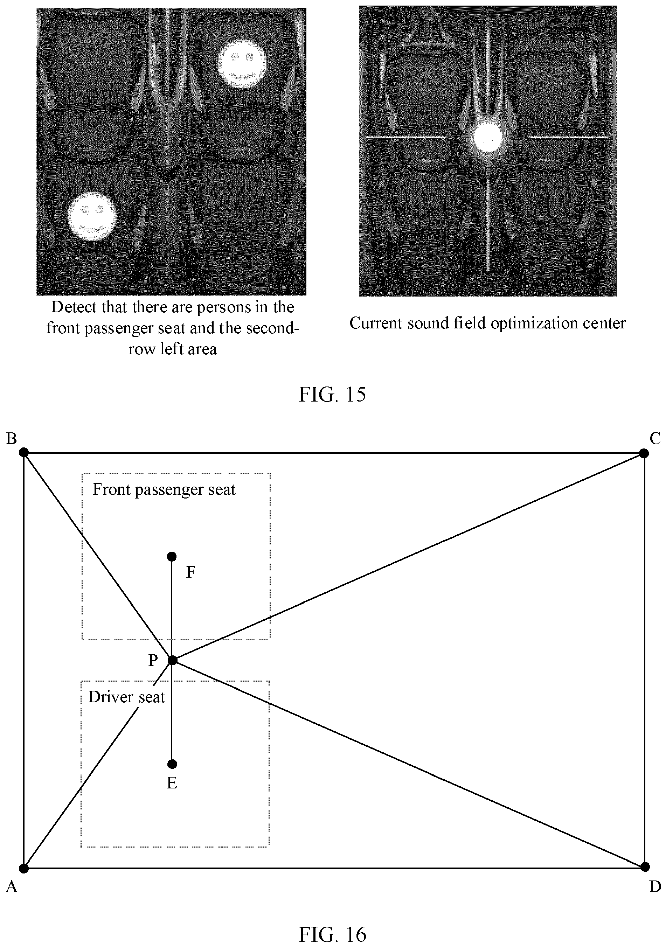

FIG. 15 is a schematic diagram of displaying a sound field optimization center on a large central control screen of a vehicle according to an embodiment of this application. When the vehicle detects that there are users in a front passenger seat and a second-row left area in the vehicle, the large central control screen may notify a user that "Detect that there are persons in the front passenger seat and the second-row left area", and notify the user that a current sound field optimization center point may be a point having equal distances with a center point of an area in which the front passenger seat is located and a center point of the second-row left area.

FIG. 16 is a schematic diagram of a sound field optimization center in a vehicle when there are users in a driver seat and a front passenger seat according to an embodiment of this application. A connection line between center points of areas in which the driver seat and the front passenger seat are located is EF, where a midpoint of EF may be a point P. The point P may be a current sound field optimization center in the vehicle.

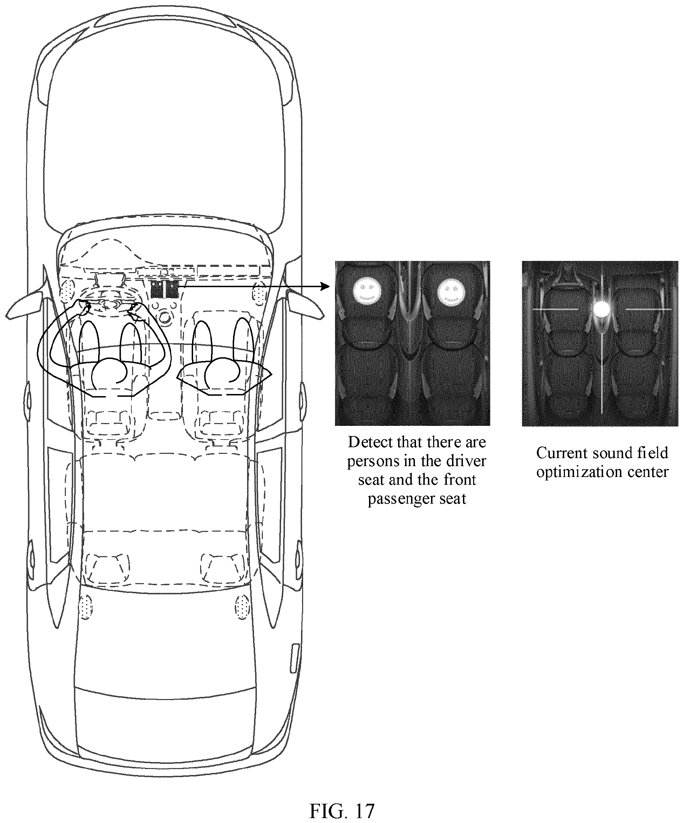

FIG. 17 is a schematic diagram of displaying a sound field optimization center on a large central control screen of a vehicle according to an embodiment of this application. When the vehicle detects that there are users in a driver seat and a front passenger seat in the vehicle, the central control screen may notify a user that "Detect that there are persons in the driver seat and the front passenger seat", and notify the user that a current sound field optimization center point may be a point having equal distances with a center point of an area in which the driver seat is located and a center point of an area in which the front passenger seat is located.

For example, the vehicle may control play intensities of four speakers based on a distance between the point P and the four speakers.

For example, for the speaker 1 (located at the point A), the vehicle may control a play intensity of the speaker 1 to be $\frac{AP}{AO} \bullet \text{p}$ .

For another example, for the speaker 2 (located at the point B), the vehicle may control a play intensity of the speaker 2 to be $\frac{BP}{AO} \bullet \text{p}$ .

For another example, for the speaker 3 (located at the point C), the vehicle may control a play intensity of the speaker 3 to be $\frac{CP}{AO} \bullet \text{p}$ .

For another example, for the speaker 4 (located at the point D), the vehicle may control a play intensity of the speaker 4 to be $\frac{DP}{AO} \bullet \text{p}$ .

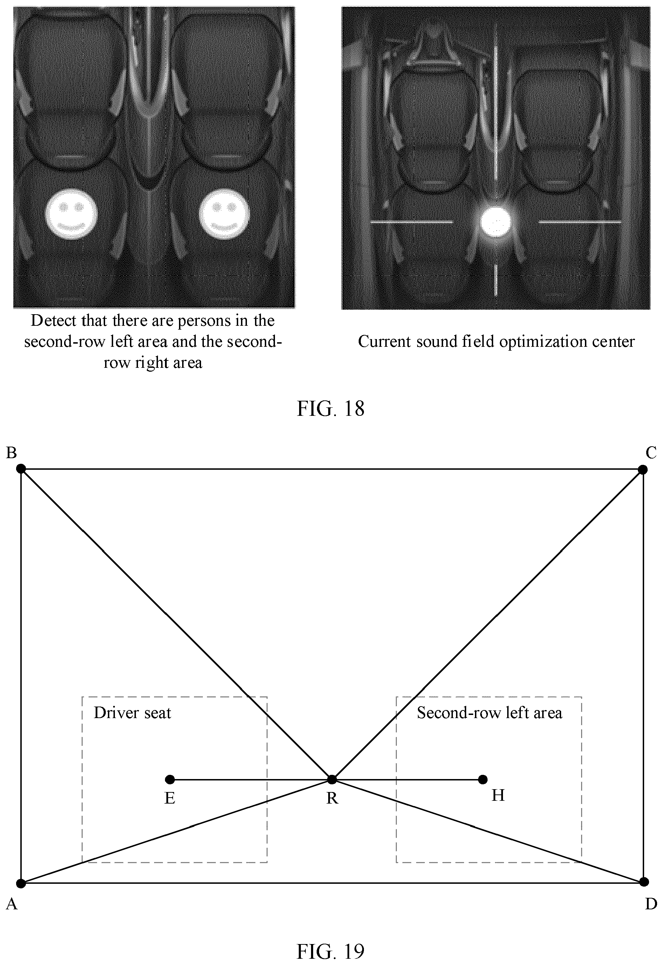

FIG. 18 is a schematic diagram of displaying a sound field optimization center on a large central control screen of a vehicle according to an embodiment of this application. When the vehicle detects that there are users in a second-row left area and a second-row right area in the vehicle, the large central control screen may notify a user that "Detect that there are persons in the second-row left area and the second-row right area", and notify the user that a current sound field optimization center point may be a point having equal distances with a center point of the second-row left area and a center point of the second-row right area.

FIG. 19 is a schematic diagram of a sound field optimization center in a vehicle when there are users in a driver seat and a second-row left area according to an embodiment of this application. A connection line between a center point of the driver seat and a center point of the second-row left area is EH, where a middle point of EH may be a point R. The point R may be a current sound field optimization center in the vehicle.

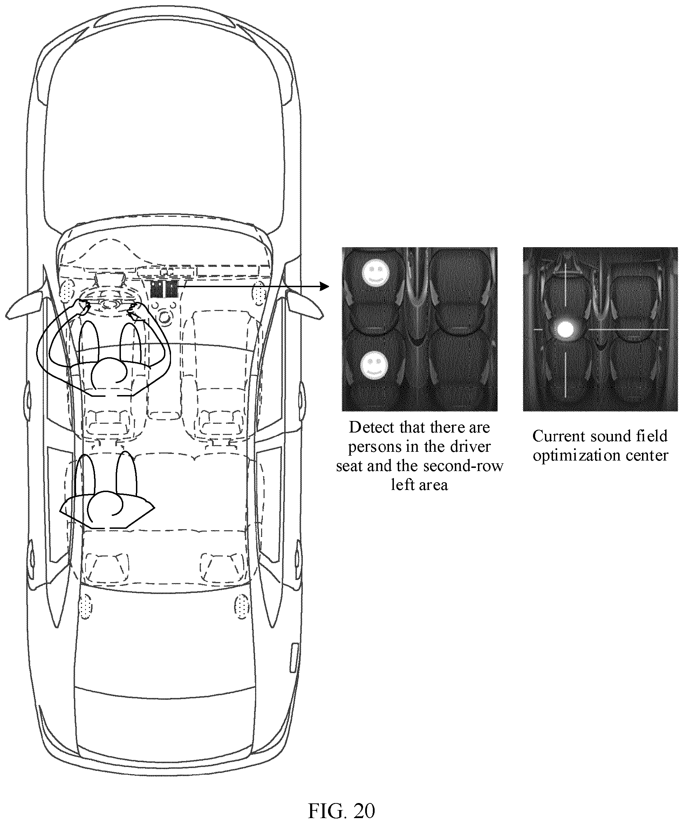

FIG. 20 is a schematic diagram of displaying a sound field optimization center on a large central control screen of a vehicle according to an embodiment of this application. When the vehicle detects that there are users in a driver seat and a second-row left area in the vehicle, the large central control screen may notify a user that "Detect that there are persons in the driver seat and the second-row left area", and notify the user that a current sound field optimization center point may be a point having equal distances with a center point of an area in which the driver seat is located and a center point of the second-row left area.

For example, the vehicle may control play intensities of four speakers based on distances between the point R and the four speakers.

For example, for the speaker 1 (located at the point A), the vehicle may control a play intensity of the speaker 1 to be $\frac{AR}{AO} \bullet \text{p}$ .

For another example, for the speaker 2 (located at the point B), the vehicle may control a play intensity of the speaker 2 to be $\frac{BR}{AO} \bullet \text{p}$ .

For another example, for the speaker 3 (located at the point C), the vehicle may control a play intensity of the speaker 3 to be $\frac{CR}{AO} \bullet \text{p}$ .

For another example, for the speaker 4 (located at the point D), the vehicle may control a play intensity of the speaker 4 to be $\frac{DR}{AO} \bullet \text{p}$ .

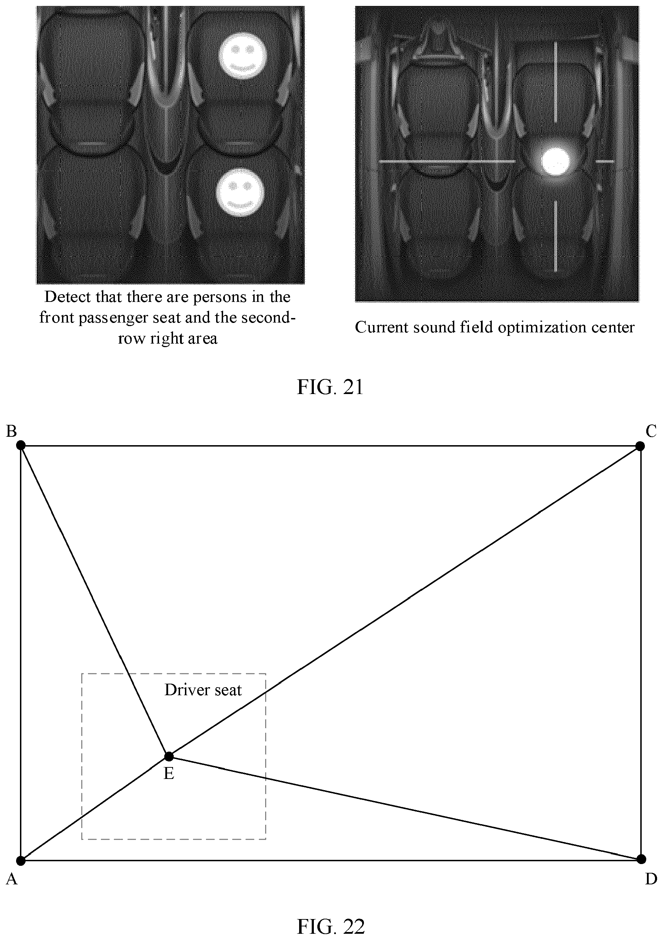

FIG. 21 is a schematic diagram of displaying a sound field optimization center on a large central control screen of a vehicle according to an embodiment of this application. When the vehicle detects that there are users in a front passenger seat and a second-row right area in the vehicle, the large central control screen may notify a user that "Detect that there are persons in the front passenger seat and the second-row right area", and notify the user that a current sound field optimization center point may be a point having equal distances with a center point of an area in which the front passenger seat is located and a center point of the second-row right area.

FIG. 22 is a schematic diagram of a sound field optimization center in a vehicle when there is a user in a driver seat according to an embodiment of this application. A center point of an area in which the driver seat is located is a point E, where the point E may be a current sound field optimization center point in the vehicle.

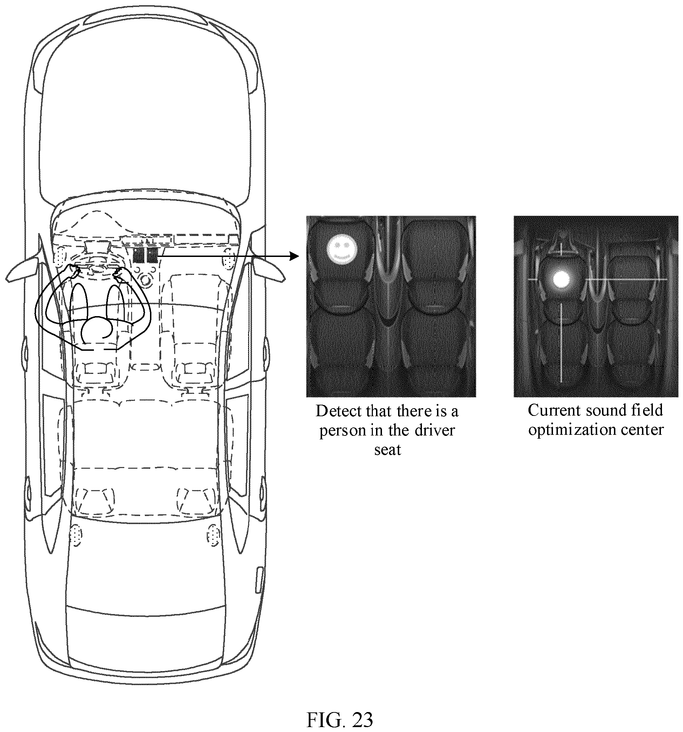

FIG. 23 is a schematic diagram of displaying a sound field optimization center on a large central control screen of a vehicle according to an embodiment of this application. When the vehicle detects that there is a user in a driver seat in the vehicle, the large central control screen may notify a user that "Detect that there is a person in the driver seat", and notify the user that a current sound field optimization center point may be a center point of an area in which the driver seat is located.

For example, the vehicle may control play intensities of four speakers based on distances between the point E and the four speakers.

For example, for the speaker 1 (located at the point A), the vehicle may control a play intensity of the speaker 1 to be $\frac{AE}{AO} \bullet p$.

For another example, for the speaker 2 (located at the point B), the vehicle may control a play intensity of the speaker 2 to be $\frac{BE}{AO} \bullet p$.

For another example, for the speaker 3 (located at the point C), the vehicle may control a play intensity of the speaker 3 to be $\frac{CE}{AO} \bullet p$.

For another example, for the speaker 4 (located at the point D), the vehicle may control a play intensity of the speaker 4 to be $\frac{DE}{AO} \bullet p$.

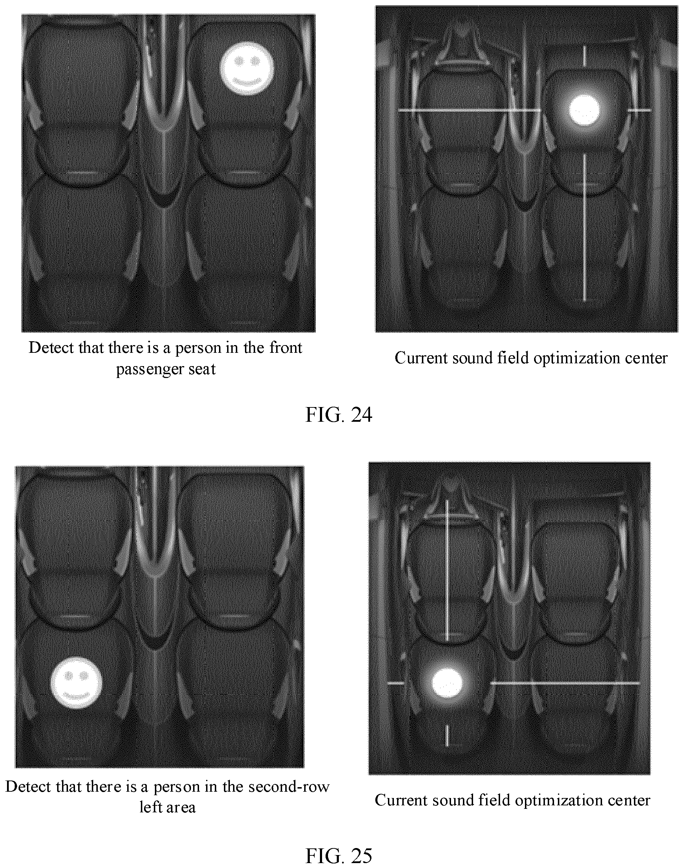

FIG. 24 is a schematic diagram of displaying a sound field optimization center on a large central control screen of a vehicle according to an embodiment of this application. When the vehicle detects that there is a user in a front passenger seat in the vehicle, the large central control screen may notify a user that "Detect that there is a person in the front passenger seat", and notify the user that a current sound field optimization center point may be a center point of an area in which the front passenger seat is located.

FIG. 25 is a schematic diagram of displaying a sound field optimization center on a large central control screen of a vehicle according to an embodiment of this application. When the vehicle detects that there is a user in a second-row left area in the vehicle, the large central control screen may notify the user that "Detect that there is a person in the second-row left area", and notify the user that a current sound field optimization center point may be a center point of the second-row left area.

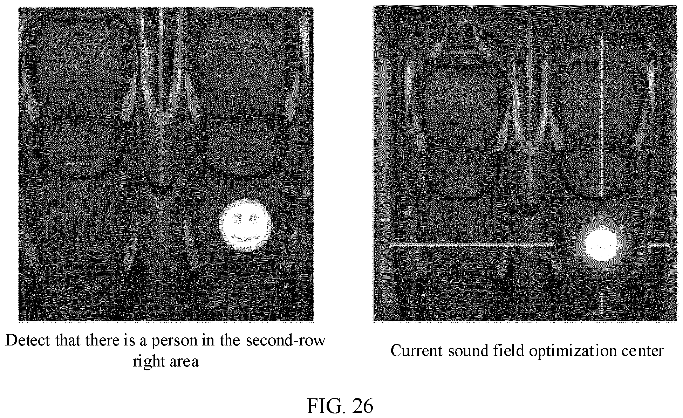

FIG. 26 is a schematic diagram of displaying a sound field optimization center on a large central control screen of a vehicle according to an embodiment of this application. When the vehicle detects that there is a user in a second-row right area in the vehicle, the large central control screen may notify the user that "Detect that there is a person in the second-row right area" and notify the user that a current sound field optimization center point may be a center point of the second-row right area.

It should be understood that an example in which position information of the user in S501 is a center point of the area in which the user is located is used for description. This embodiment of this application is not limited thereto. For example, the position information of the user may alternatively be another preset point of the area in which the user is located, or the position information of the user may alternatively be a point of an area that is obtained through calculation according to a preset rule (for example, a preset algorithm).

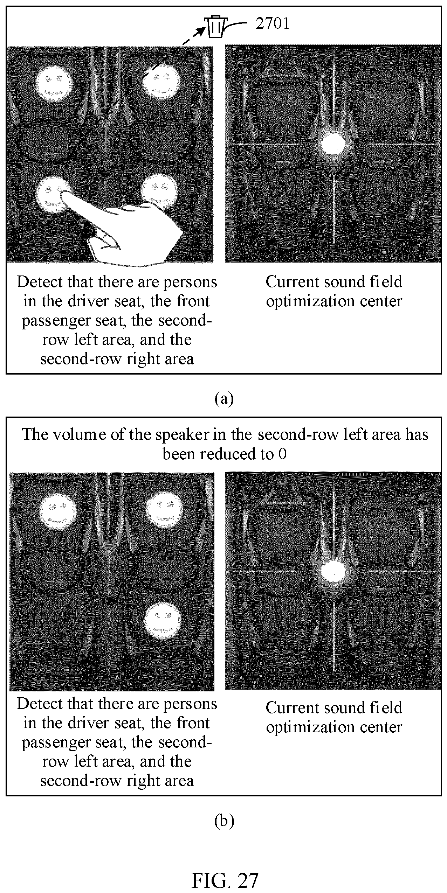

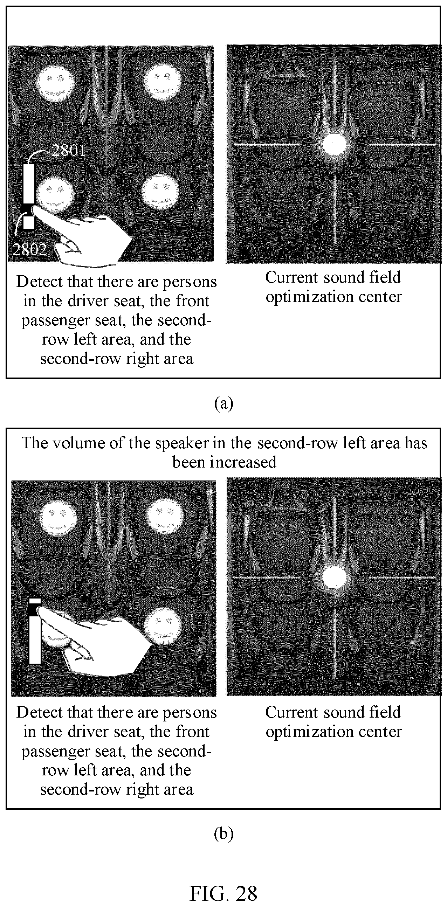

In an embodiment, the position information of the user may alternatively be determined based on position information of a human ear of the user. The position information of the human ear of the user may be determined based on image information collected by a camera apparatus. For example, the position information of the human ear of the user is a midpoint of a connection line between a first point and a second point, where the first point is a point on a left ear of the user, and the second point is a point on a right ear of the user. For another example, position information of a pinna of the human ear of the user may be determined based on image information collected by a camera apparatus. Position information of an area may be determined based on the position information of the human ear of the user or the position information of the pinna of the human ear. With reference to FIG. 27 and FIG. 28, the following describes a process in which a user manually adjusts a play intensity of a specific speaker after the vehicle adjusts play intensities of a plurality of sound-making apparatuses by using the position information of the user.

FIG. 27 shows a group of graphical user interfaces (graphical user interface, GUI) according to an embodiment of this application.

As shown in (a) in FIG. 27, when there are users in a driver seat, a front passenger seat, a second-row left area, and a second-row right area, a vehicle may notify a user that "Detect that there are persons in the driver seat, the front passenger seat, the second-row left area and the second-row right area" on an HMI, and notify the user of a current sound field optimization center. As shown in (a) in FIG. 27, smiley faces in the driver seat, the front passenger seat, the second-row left area, and the second-row upper right area indicate that there are users in the areas. When detecting an operation of touching and holding a smiley face in the second-row left area by the user, the vehicle may display an icon 2701 (for example, a garbage bin icon) on the HMI. When the vehicle detects that the user drags the smiley face in the second-row left area to the icon 2701, the vehicle may display, on the HMI, a GUI shown in (b) in FIG. 27.

As shown in (b) in FIG. 27, in response to the detected operation of the user dragging the smiley face in the second-row left area to the icon 2701, the vehicle may notify the user that "The volume of the speaker in the second-row left area has been reduced to 0" on the HMI.

In an embodiment, if there are users in the driver seat, the front passenger seat, the second-row left area, and the second-row right area, play intensities of current four speakers may be p. When the vehicle detects an operation of dragging a smiley face in the second-row left area to the icon 2701 by the user, the vehicle may reduce a play intensity of a speaker of the second-row left area to 0, or decrease the speaker play intensity of the second-row left area from p to 0.1p. This is not limited in this embodiment of this application.

FIG. 28 shows a group of GUIs according to an embodiment of this application.

As shown in (a) in FIG. 28, when there are users in a driver seat, a front passenger seat, a second-row left area, and a second-row right area, a vehicle may notify a user that "Detect that there are persons in the driver seat, the front passenger seat, the second-row left area, and the second-row right area" on an HMI, and notify the user of a current sound field optimization center. When the vehicle detects, on the HMI, an operation of sliding a finger of the user upward in the second-row left area, a scroll bar 2801 of a play intensity may be displayed. The scroll bar 2801 of the play intensity may include a scroll block 2802.

As shown in (b) in FIG. 28, in response to the detected operation of sliding the finger of the user upward in the second-row left area, the vehicle may increase a play intensity of a speaker near the second-row left area and display the scroll block 2802 on the HMI to move upward. For example, the play intensity of the speaker near the second-row left area may be increased from p to 1.5p. At the same time, the vehicle can notify the user that "The volume of the speaker in the second-row left area has been increased" on the HMI.

In this embodiment of this application, after adjusting a play intensity of a first sound-making apparatus to a first play intensity, if detecting an operation of adjusting, by the user, a play intensity of a speaker from the first play intensity to a second play intensity, the vehicle may adjust the play intensity of the speaker to the second play intensity. In this way, the user can quickly adjust the play intensity of the speaker in the area, so that the speaker in the area better meets listening effect of the user.

In an embodiment, the vehicle may further determine a status of a user in an area based on image information collected by a camera, so as to adjust a play intensity of a speaker near the area with reference to position information of the area and the status of the user. For example, when the vehicle detects that there is a user in the second-row left area and the user is resting, the vehicle may control the play intensity of the speaker near the second-row left area to be 0 or another value.

In an embodiment, the second play intensity may alternatively be a default play intensity (for example, the second play intensity is 0). When the vehicle detects a preset operation of the user in an area (for example, the second-row left area) on the large central control screen, the vehicle may adjust a play intensity of a speaker in the area from the first play intensity to the default play intensity.

In an embodiment, the preset operation includes but is not limited to a touch and hold operation of the user detected in the area, (for example, touch and hold a seat in the second-row left area), and a sliding or tapping operation in the area.

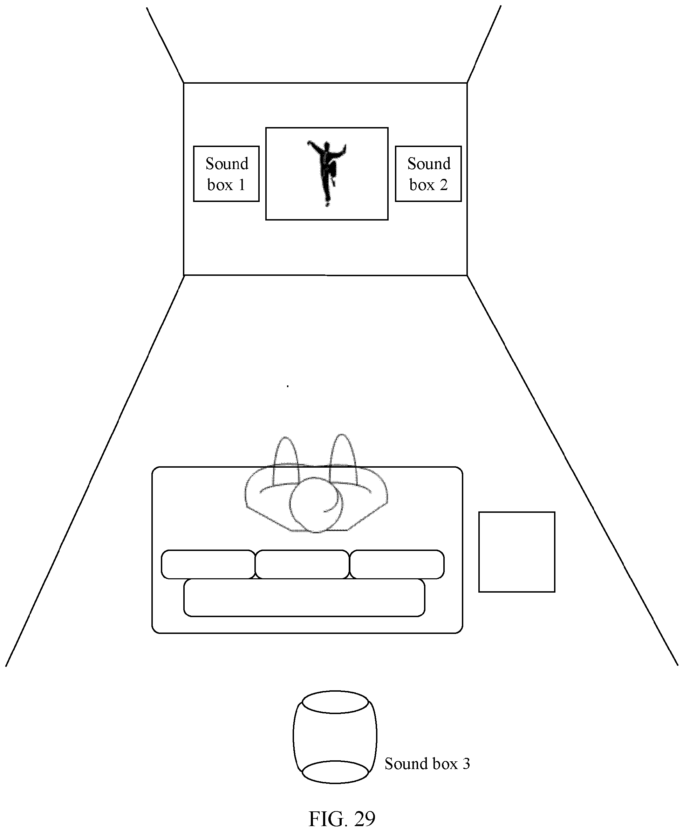

It should be understood that, with reference to FIG. 6 to FIG. 28, the foregoing describes a case in which the sound-making apparatus control method provided in embodiments of this application is applied to an in-vehicle scenario, and the control method may be further applied to another scenario, for example, a home theater scenario or a KTV scenario. FIG. 29 is a schematic diagram of a sound-making apparatus control method when applied to a home theater according to an embodiment of this application. As shown in FIG. 29, the home theater may include a sound box 1, a sound box 2, and a sound box 3. A sound-making system in the home theater can adjust the three sound boxes by detecting position relationship between a user and the three sound boxes.

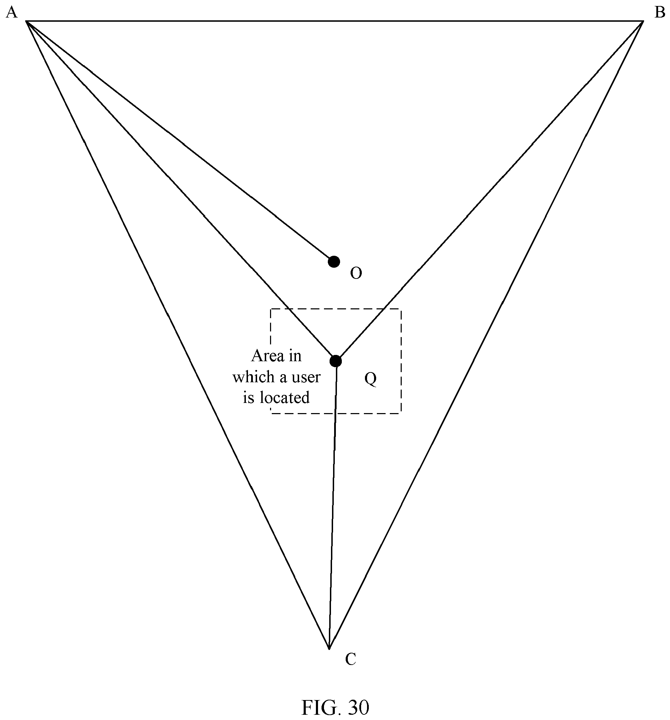

FIG. 30 is a schematic diagram of a sound field optimization center in a home theater according to an embodiment of this application. For example, a graph including connection lines of points at which three sound boxes are located is a triangle ABC, where a sound box 1 is disposed at a point A on the triangle ABC, a sound box 2 is disposed at a point B, and a sound box 3 is disposed at a point C. A point O is a circumcenter of the triangle ABC.

When a center point of an area in which a user is located coincides with the point O, or when the point O is located in an area in which a user is located, a sound-making system may control the sound box 1, the sound box 2, and the sound box 3 to have a same play intensity. (For example, all play intensities of the three sound boxes are p).

When the center point of the area in which the user is located does not coincide with the point O, or when the point O is not located in the area in which the user is located, the sound-making system may adjust the play intensities of the three sound boxes based on a position relationship between the area in which the user is located and the three sound boxes.

For example, the center point of the area in which the user is located is a point Q. For the sound box 1 (located at the point A), the sound-making system may control a play intensity of the sound box 1 to be $\frac{AQ}{AO} \bullet p$.

For another example, for the sound box 2 (located at the point B), the sound-making system may control a play intensity of the sound box 2 to be $\frac{BQ}{AO} \bullet p$.

For another example, for the sound box 3 (located at the point C), the sound-making system may control a play intensity of the sound box 3 to be $\frac{CQ}{AO} \bullet p$.

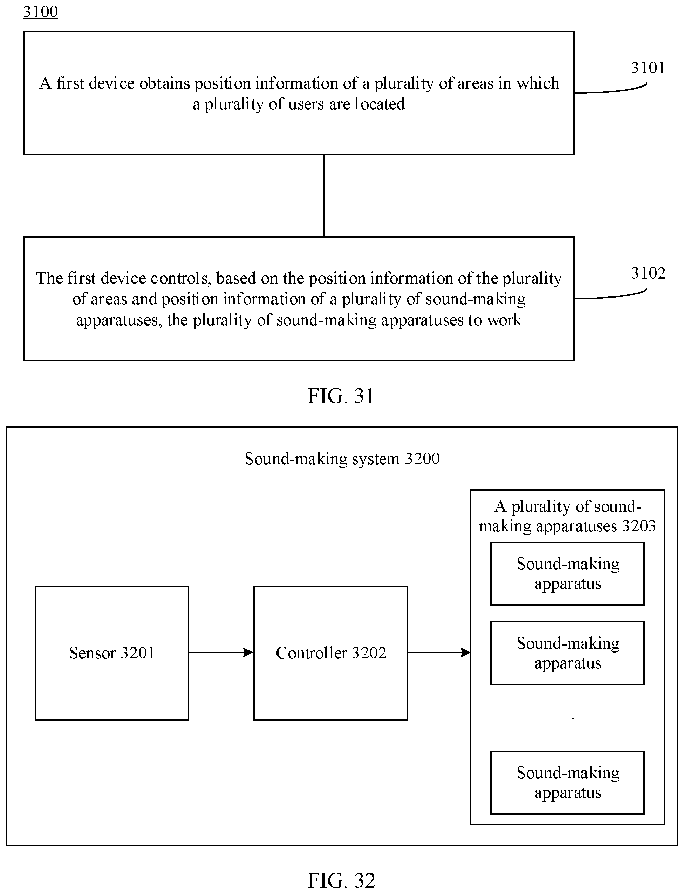

FIG. 31 is a schematic flowchart of a sound-making apparatus control method 3100 according to an embodiment of this application. The method 3100 may be applied to a first device. As shown in FIG. 31, the method 3100 includes the following steps.

S3101: A first device obtains position information of a plurality of areas in which a plurality of users are located.

Optionally, that a first device obtains position information of a plurality of areas in which a plurality of users are located includes: obtaining sensing information; and determining the position information of the plurality of areas based on the sensing information, where the sensing information includes one or more of image information, pressure information, and sound information.

For example, the sensing information may include image information. The first device may obtain the image information by using an image sensor.

For example, the first device is a vehicle. The vehicle may determine, based on image information collected by an image shooting apparatus, whether the image information includes face contour information, human ear information, iris information, or the like. When the vehicle needs to determine whether there is a user in a driver area, the vehicle may obtain image information of the driver area that is collected by a driver camera. If the vehicle may determine that the image information includes one or more of face contour information, human ear information, or iris information, the first device may determine that there is a user in the driver area.

It should be understood that an implementation process of determining that the image information includes one or more of the face contour information, the human ear information, or the iris information is not limited in this embodiment of this application. For example, the vehicle may input the image information into a neural network, to obtain a classification result thin the area includes a face of the user.

For another example, the vehicle may further establish a coordinate system for the driver area. When the vehicle needs to determine whether there is a person in the driver area, the vehicle may collect image information of a plurality of coordinate points in the coordinate system by using the driver camera, and further analyze whether there is feature information of a person at the plurality of coordinate points. If there is the feature information of the person, the vehicle may determine that there is the user in the driver area.

Optionally, the first device is a vehicle, and the sensing information may be pressure information. For example, a pressure sensor is included under each seat in the vehicle, and that a first device obtains position information of a plurality of areas in which a plurality of users are located includes: The first device obtains, based on the pressure information (for example, a pressure value) collected by the pressure sensor, the position information of the plurality of areas in which the plurality of users are located.

Optionally, when the pressure value collected by the pressure sensor is greater than or equal to a first threshold, the vehicle determines that there is a user in the area corresponding to the pressure sensor. For example, when a pressure value detected by a pressure sensor under a seat at the driver area is greater than or equal to a preset pressure value, the vehicle may determine that there is a user in the driver area.

Optionally, the sensing information may be sound information. That a first device obtains position information of a plurality of areas in which a plurality of users are located includes: The first device obtains, by using sound signals collected by a microphone array, the position information of the plurality of areas in which the plurality of users are located. For example, the first device may locate a user based on a sound signal collected by the microphone array. If the first device locates, based on the sound signal, that a user is located in an area, the first device may determine that there is the user in the area.

Optionally, the first device may further determine, with reference to at least two types of image information, pressure information, and sound information, whether there is the user in the area.

For example, the first device is a vehicle. When the vehicle needs to determine whether there is a user in the driver area, the vehicle may obtain image information collected by the driver camera and pressure information collected by the pressure sensor in the driver seat. If determining, based on the image information collected by the driver camera, that the image information includes face information and the pressure value collected by the pressure sensor in the driver seat is greater than or equal to the first threshold, the vehicle may determine that there is the user in the driver area.

For another example, when the first device needs to determine whether there is a user in an area, the first device may obtain image information in the area that is collected by the camera, and pick up sound information in an environment by using the microphone array. If determining, based on the image information of the area that is collected by the camera, that the image information includes face information, and determining, based on the sound information collected by the microphone array, that a sound comes from the area, the vehicle may determine that there is the user in the area.

S3102: The first device controls, based on the position information of the plurality of areas in which the plurality of users are located and position information of a plurality of sound-making apparatuses, the plurality of sound-making apparatuses to work.

Optionally, the position information of the plurality of areas in which the plurality of users are located may include a center point of each of the plurality of areas, or a preset point of each of the plurality of areas, or a point of each area that is obtained according to a preset rule (for example, a preset algorithm).

Optionally, that the first device controls, based on the position information of the plurality of areas and the position information of the plurality of sound-making apparatuses, the plurality of sound-making apparatuses to work includes: controlling, based on the position information of the plurality of areas and a mapping relationship, the plurality of sound-making apparatuses to work, where the mapping relationship is a mapping relationship between positions of the plurality of areas and play intensities of the plurality of sound-making apparatuses.

For example, the vehicle shown in FIG. 4 is used as an example. Table 1 shows a mapping relationship between positions of a plurality of areas and play intensities of a plurality of sound-making apparatuses.

**Table 1**

| Positions of a plurality of areas | | | | Play intensities of a plurality of sound-making apparatuses | | | |
|---|---|---|---|---|---|---|---|
| Driver seat | Front passenger seat | Second-row left area | Second-row right area | Speaker 1 | Speaker 2 | Speaker 3 | Speaker 4 |
| Person | Person | Person | Person | p | p | p | p |
| Person | Person | Person | No person | p | p | p | p |
| Person | Person | No person | Person | p | p | p | p |
| Person | No person | Person | Person | p | p | p | p |
| No person | Person | Person | Person | p | p | p | p |
| Person | No person | No person | Person | p | p | p | p |
| No person | Person | Person | No person | p | p | p | p |
| Person | Person | No person | No person | 0.6p | 0.6p | 1.8p | 1.8p |
| No person | No person | Person | Person | 1.8p | 1.8p | 0.6p | 0.6p |
| Person | No person | Person | No person | 0.8p | 1.4p | 1.4p | 0.8p |
| No person | Person | No person | Person | 1.4p | 0.8p | 0.8p | 1.4p |
| Person | No person | No person | No person | 0.5p | 0.8p | 1.5p | 1.1p |

(continued)

| Positions of a plurality of areas | | | | Play intensities of a plurality of sound-making apparatuses | | | |
|---|---|---|---|---|---|---|---|
| Driver seat | Front passenger seat | Second-row left area | Second-row right area | Speaker 1 | Speaker 2 | Speaker 3 | Speaker 4 |
| No person | Person | No person | No person | 0.8p | 0.5p | 1.1p | 1.5p |
| No person | No person | Person | No person | 1.5p | 1.1p | 0.5p | 0.8p |
| No person | No person | No person | Person | 1.1p | 1.5p | 0.8p | 0.5p |

It should be understood that the mapping relationship between the positions and the play intensities of the plurality of sound-making apparatuses shown in Table 1 is merely an example. An area division manner and a play intensity of a speaker are not limited in this embodiment of this application.

Optionally, that the first device controls, based on the position information of the plurality of areas and position information of a plurality of sound-making apparatuses, the plurality of sound-making apparatuses to work includes: The first device determines a sound field optimization center point, where distances between the sound field optimization center point and center points of all of the plurality of areas are equal; and the first device controls, based on a distance between the sound field optimization center point and each of the plurality of sound-making apparatuses, each of the plurality of sound-making apparatuses to work.

Optionally, the method further includes: The first device notifies position information of the sound field optimization center point.

Optionally, the first device notifies the position information of the current sound field optimization center by using an HMI, a sound, or an atmosphere light.

Optionally, the plurality of areas are areas in a vehicle cockpit.

Optionally, the plurality of areas include a front-row area and a rear-row area. Optionally, the plurality of areas may include a driver area and a front passenger area.

Optionally, the method further includes: The first device notifies the position information of the plurality of areas in which the plurality of users are located.

Optionally, that the first device controls the plurality of sound-making apparatuses to work includes: The first device adjusts a play intensity of each of the plurality of sound-making apparatuses.

Optionally, the plurality of sound-making apparatuses include a first sound-making apparatus, and that the first device adjusts a play intensity of each of the sound-making apparatuses includes: The first device controls a play intensity of the first sound-making apparatus to be a first play intensity. The method further includes: The first device obtains an instruction of a user to adjust the play intensity of the first sound-making apparatus from the first play intensity to a second play intensity; and the first device adjusts the play intensity of the first sound-making apparatus to the second play intensity in response to obtaining the instruction.

For example, as shown in (b) in FIG. 27, there are users in the driver seat, the front passenger seat, the second-row left area, and the second-row right area in the vehicle. In this case, the vehicle may control play intensities of four speakers to be p. When the vehicle detects that the user drags a smiley face in the second-row left area on an HMI to the icon 2701, the vehicle may adjust a play intensity of a speaker near the second-row left area from p to 0.

For example, as shown in (b) in FIG. 28, there are users in the driver seat, the front passenger seat, the second-row left area, and the second-row right area in the vehicle. In this case, the vehicle may control the play intensities of the four speakers to be p. When the vehicle detects an operation of sliding upward by the user in the second-row left area on the HMI, the vehicle may adjust the play intensity of the speaker near the second-row left area from p to 1.5p.

In this embodiment of this application, the first device obtains the position information of the plurality of areas in which the plurality of users are located, and controls, based on the position information of the plurality of areas and the position information of the plurality of sound-making apparatuses, the plurality of sound-making apparatuses to work, without a need for a user to manually adjust the sound-making apparatuses. This helps to reduce learning costs of the user and reduce complicated operations of the user. In addition, this also helps the plurality of users enjoy good listening effect, and helps to improve user experience.

FIG. 32 is a schematic diagram of a structure of a sound-making system 3200 according to an embodiment of this application. The sound-making system may include a sensor 3201, a controller 3202, and a plurality of sound-making apparatuses 3203. The sound-making system includes a sensor, a controller, and a plurality of sound-making apparatuses.

The sensor 3201 is configured to collect data and send the data to the controller.

The controller 3202 is configured to obtain, based on the data, position information of a plurality of areas in which a plurality of users are located; and control, based on the position information of the plurality of areas and position information of the plurality of sound-making apparatuses, the plurality of sound-making apparatuses 3203 to work. Optionally, the data includes at least one of image information, pressure information, and sound information.

Optionally, the controller 3202 is specifically configured to: determine a sound field optimization center point, where distances between the sound field optimization center point and center points of all of the plurality of areas are equal; and control, based on a distance between the sound field optimization center point and each of the plurality of sound-making apparatuses, each of the plurality of sound-making apparatuses to work.

Optionally, the controller 3202 is further configured to send a first instruction to a first prompt apparatus, where the first instruction instructs the first prompt apparatus to notify the position information of the sound field optimization center point.

Optionally, the plurality of areas are areas in a vehicle cockpit.

Optionally, the plurality of areas include a front-row area and a rear-row area.

Optionally, the plurality of areas may include a driver area and a front passenger area.

Optionally, the controller 3202 is further configured to send a second instruction to a second prompt apparatus, where the second instruction instructs the second prompt apparatus to notify the position information of the plurality of areas in which the plurality of users are located.

Optionally, the controller 3202 is specifically configured to adjust a play intensity of each of the plurality of sound-making apparatuses 3203.

Optionally, the plurality of sound-making apparatuses 3203 include a first sound-making apparatus. The controller 3202 is specifically configured to control a play intensity of the first sound-making apparatus to be a first play intensity. The controller 3202 is further configured to: obtain a third instruction of the user to adjust the play intensity of the first sound-making apparatus from the first play intensity to a second play intensity, and adjust the play intensity of the first sound-making apparatus to the second play intensity in response to obtaining the third instruction.

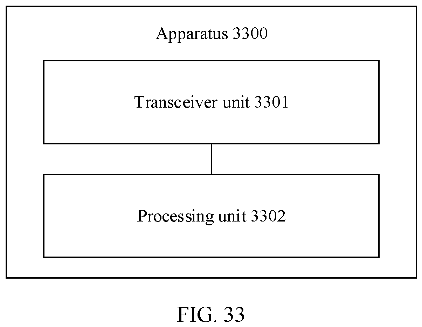

FIG. 33 is a schematic block diagram of an apparatus 3300 according to an embodiment of this application. The apparatus 3300 includes a transceiver unit 3301 and a processing unit 3302. The transceiver unit 3301 is configured to receive sensing information. The processing unit 3302 is configured to obtain, based on the sensing information, position information of a plurality of areas in which a plurality of users are located. The processing unit 3302 is further configured to control, based on the position information of the plurality of areas in which the plurality of users are located and position information of a plurality of sound-making apparatuses, the plurality of sound-making apparatuses to work.

Optionally, that the processing unit 3302 is further configured to control, based on the position information of the plurality of areas and the position information of the plurality of sound-making apparatuses, the plurality of sound-making apparatuses to work includes: The processing unit 3302 is configured to: determine a sound field optimization center point, where distances between the sound field optimization center point and center points of all of the plurality of areas are equal; and control, based on a distance between the sound field optimization center point and each of the plurality of sound-making apparatuses, each of the plurality of sound-making apparatuses to work.

Optionally, the transceiver unit 3301 is further configured to send a first instruction to a first prompt unit, where the first instruction instructs the first prompt unit to notify the position information of the sound field optimization center point.

Optionally, the plurality of areas are areas in a vehicle cockpit.

Optionally, the plurality of areas include a front-row area and a rear-row area.

Optionally, the plurality of areas include a driver area and a front passenger area.

Optionally, the transceiver unit 3301 is further configured to send a second instruction to a second prompt unit, where the second instruction instructs the second prompt unit to notify the position information of the plurality of areas in which the plurality of users are located.

Optionally, the processing unit 3302 is specifically configured to adjust a play intensity of each of the plurality of sound-making apparatuses.

Optionally, the plurality of sound-making apparatuses include a first sound-making apparatus. The processing unit 3302 is specifically configured to control a play intensity of the first sound-making apparatus to be a first play intensity. The transceiver unit 3301 is further configured to receive a third instruction, where the third instruction is an instruction instructing to adjust the play intensity of the first sound-making apparatus from the first play intensity to a second play intensity. The processing unit 3302 is further configured to adjust the play intensity of the first sound-making apparatus to the second play intensity.

Optionally, the sensing information includes one or more of image information, pressure information, and sound information.

An embodiment of this application further provides an apparatus. The apparatus includes a processing unit and a storage unit. The storage unit is configured to store instructions, and the processing unit executes the instructions stored in the storage unit, so that the apparatus performs the sound-making apparatus control method.

Optionally, the processing unit may be the processor 151 shown in FIG. 1, and the storage unit may be the memory 152 shown in FIG. 1. The memory 152 may be a storage unit (for example, a register or a cache) in a chip, or may be a storage unit located outside the chip in a vehicle (for example, a read-only memory, or a random access memory).

An embodiment of this application further provides a vehicle including the sound-making system 3200 or the apparatus 3300.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the method can be implemented by using a hardware integrated logical circuit in the processor 151, or by using instructions in a form of software. The method disclosed with reference to embodiments of this application may be directly performed by a hardware processor, or may be performed by using a combination of hardware in the processor 151 and a software module. A software module may be located in a mature storage medium in the art, such as a random access memory, a flash memory, a read-only memory, a programmable read-only memory, an electrically erasable programmable memory, or a register. The storage medium is located in the memory, and a processor 151 reads information in the memory 152 and completes the steps in the method in combination with hardware of the processor 151. To avoid repetition, details are not described herein again.

It should be understood that, the processor 151 in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should also be understood that in embodiments of this application, the memory 152 may include a read-only memory and a random access memory, and provide instructions and data to the processor.

In embodiments of this application, "first", "second", and various numeric numbers are merely used for distinguishing for ease of description and are not intended to limit the scope of embodiments of this application. For example, "first", "second", and various numeric numbers are used for distinguishing between different pipes, through holes, and the like.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sound-making apparatus control method, comprising:

   obtaining position information of a plurality of areas in which a plurality of users are located; and
   controlling, based on the position information of the plurality of areas and position information of a plurality of sound-making apparatuses, the plurality of sound-making apparatuses to work.

2. The method according to claim 1, wherein the controlling, based on the position information of the plurality of areas and position information of a plurality of sound-making apparatuses, the plurality of sound-making apparatuses to work comprises:

   determining a sound field optimization center point, wherein distances between the sound field optimization center point and center points of all of the plurality of areas are equal; and
   controlling, based on a distance between the sound field optimization center point and each of the plurality of sound-making apparatuses, each of the plurality of sound-making apparatuses to work.

3. The method according to claim 2, wherein the method further comprises:
   notifying position information of the sound field optimization center point.

4. The method according to any one of claims 1 to 3, wherein the plurality of areas are areas in a vehicle cockpit.

5. The method according to claim 4, wherein the plurality of areas comprise a front-row area and a rear-row area.

6. The method according to claim 4, wherein the plurality of areas comprise a driver area and a front passenger area.

7. The method according to any one of claims 1 to 6, wherein the method further comprises:
   notifying the position information of the plurality of areas in which the plurality of users are located.

8. The method according to any one of claims 1 to 7, wherein the controlling the plurality of sound-making apparatuses to work comprises:
   adjusting a play intensity of each of the plurality of sound-making apparatuses.

9. The method according to claim 8, wherein the plurality of sound-making apparatuses comprise a first sound-making apparatus, and the adjusting a play intensity of each of the plurality of sound-making apparatuses comprises:

   controlling a play intensity of the first sound-making apparatus to be a first play intensity; and

the method further comprises:

obtaining an instruction of a user to adjust the play intensity of the first sound-making apparatus from the first play intensity to a second play intensity; and
adjusting the play intensity of the first sound-making apparatus to the second play intensity in response to obtaining the instruction.

10. The method according to any one of claims 1 to 9, wherein the obtaining position information of a plurality of areas in which a plurality of users are located comprises:

obtaining sensing information; and
determining the position information of the plurality of areas based on the sensing information, wherein
the sensing information comprises one or more of image information, pressure information, and sound information.

11. An electronic apparatus, comprising:

a transceiver unit, configured to receive sensing information; and
a processing unit, configured to obtain, based on the sensing information, position information of a plurality of areas in which a plurality of users are located, wherein
the processing unit is further configured to control, based on the position information of the plurality of areas and position information of a plurality of sound-making apparatuses, the plurality of sound-making apparatuses to work.

12. The electronic apparatus according to claim 11, wherein that the processing unit is further configured to control, based on the position information of the plurality of areas and the position information of the plurality of sound-making apparatuses, the plurality of sound-making apparatuses to work comprises:
the processing unit is configured to:

determine a sound field optimization center point, wherein distances between the sound field optimization center point and center points of all of the plurality of areas are equal; and
control, based on a distance between the sound field optimization center point and each of the plurality of sound-making apparatuses, each of the plurality of sound-making apparatuses to work.

13. The electronic apparatus according to claim 12, wherein the transceiver unit is further configured to send a first instruction to a first prompt unit, wherein the first instruction instructs the first prompt unit to notify position information of the sound field optimization center point.

14. The electronic apparatus according to any one of claims 11 to 13, wherein the plurality of areas are areas in a vehicle cockpit.

15. The electronic apparatus according to claim 14, wherein the plurality of areas comprise a front-row area and a rear-row area.

16. The electronic apparatus according to claim 14, wherein the plurality of areas comprise a driver area and a front passenger area.

17. The electronic apparatus according to any one of claims 11 to 16, wherein the transceiver unit is further configured to send a second instruction to a second prompt unit, wherein the second instruction instructs the second prompt unit to notify the position information of the plurality of areas in which the plurality of users are located.

18. The electronic apparatus according to any one of claims 11 to 17, wherein the processing unit is specifically configured to adjust a play intensity of each of the plurality of sound-making apparatuses.

19. The electronic apparatus according to claim 18, wherein the plurality of sound-making apparatuses comprise a first sound-making apparatus, and the processing unit is specifically configured to control a play intensity of the first sound-making apparatus to be a first play intensity;

the transceiver unit is further configured to receive a third instruction, wherein the third instruction is an instruction instructing to adjust the play intensity of the first sound-making apparatus from the first play intensity to a second play intensity; and
the processing unit is further configured to adjust the play intensity of the first sound-making apparatus to the second play intensity.

20. The electronic apparatus according to any one of claims 11 to 19, wherein the sensing information comprises one or more of image information, pressure information, and sound information.

21. An electronic apparatus, comprising:

   a memory, configured to store instructions; and
   a processor, configured to read the instructions, to perform the method according to any one of claims 1 to 10.

22. A system, comprising a sensor and an electronic apparatus, wherein the electronic apparatus is the electronic apparatus according to any one of claims 11 to 21.

23. The system according to claim 22, wherein the system further comprises a plurality of sound-making apparatuses.

24. A computer-readable storage medium, wherein the computer-readable medium stores program code, and when the program code is run on a computer, the computer is enabled to perform the method according to any one of claims 1 to 10.

25. A vehicle, wherein the vehicle comprises the electronic apparatus according to any one of claims 11 to 21, or the vehicle comprises the system according to claim 22 or 23.

EP 4 344 255 A1

| | | | |
|---|---|---|---|
| **Infotainment system 110** | **Sensing system 120** | **Decision control system 130** | **Propulsion system 140** |
| Communication system 111 | Global positioning system 121 | Computing system 131 | Engine 141 |
| Entertainment system 112 | Inertial measurement unit 122 | Vehicle control unit 132 | Energy source 142 |
| Navigation system 113 | Lidar 123 | Steering system 133 | Drive system 143 |
| | Millimeter-wave radar 124 | Throttle 134 | Wheel 144 |
| | Ultrasonic radar 125 | Braking system 135 | |
| | Camera apparatus 126 | | |

Computing platform 150

Processor 151

Memory 152

Instructions 153

Vehicle 100

FIG. 1

FIG. 2

**Input component**

| Vehicle speed sensor 2 | | Microphone 2 |
| Lidar 2 | | Camera 2 |
| Ultrasonic sensor 2 | | Acceleration sensor 2 |
| Millimeter-wave radar 2 | | Vehicle state sensor 2 |

| Vehicle speed sensor 3 | | Microphone 3 |
| Lidar 3 | | Camera 3 |
| Ultrasonic sensor 3 | | Acceleration sensor 3 |
| Millimeter-wave radar 3 | | Vehicle state sensor 3 |

| Speaker 2 | VIU 2 | VIU 3 | Speaker 3 |

**Output component**

MDC  CDC  VDC

| Speaker 1 | VIU 1 | VIU 4 | Speaker 4 |

**Communication architecture**

| Vehicle speed sensor 1 | | Microphone 1 |
| Lidar 1 | | Camera 1 |
| Ultrasonic sensor 1 | | Acceleration sensor 1 |
| Millimeter-wave radar 1 | | Vehicle state sensor 1 |

| Vehicle speed sensor 4 | | Microphone 4 |
| Lidar 4 | | Camera 4 |
| Ultrasonic sensor 4 | | Acceleration sensor 4 |
| Millimeter-wave radar 4 | | Vehicle state sensor 4 |

FIG. 3

FIG. 4

FIG. 5

FIG. 6

B ● ━━━━━━━━━━━━━━━━━━━━━━━━━━━━━━━━━━ ● C

Front passenger seat  Second-row right area

F ●━━━━━━━━━━━━━━━━━● G

● Q

Driver seat  Second-row left area

E ●━━━━━━━━━━━━━━━━━● H

A ● ━━━━━━━━━━━━━━━━━━━━━━━━━━━━━━━━━━ ● D

FIG. 7

Detect that there are persons in the driver seat, the front passenger seat, the second-row left area, and the second-row right area

Current sound field optimization center

FIG. 8

B C

Front passenger seat

F

Q

Driver seat Second-row left area

E G

A D

FIG. 9

Detect that there are persons in the driver seat, the front passenger seat, and the second-row left area

Current sound field optimization center

FIG. 10

Detect that there are persons in the driver seat, the front passenger seat, and the second-row right area

Current sound field optimization center

FIG. 11

Detect that there are persons in the driver seat, the second-row left area, and the second-row right area

Current sound field optimization center

FIG. 12

FIG. 13

Detect that there are persons in the driver
seat and the second-row right area

Current sound field optimization center

FIG. 14

Detect that there are persons in the front passenger seat and the second-row left area

Current sound field optimization center

FIG. 15

FIG. 16

Detect that there are persons in the driver seat and the front passenger seat

Current sound field optimization center

FIG. 17

Detect that there are persons in the second-row left area and the second-row right area

Current sound field optimization center

FIG. 18

FIG. 19

Detect that there are persons in the driver seat and the second-row left area

Current sound field optimization center

FIG. 20

Detect that there are persons in the front passenger seat and the second-row right area

Current sound field optimization center

FIG. 21

FIG. 22

Detect that there is a
person in the driver
seat

Current sound field
optimization center

FIG. 23

Detect that there is a person in the front passenger seat

Current sound field optimization center

FIG. 24

Detect that there is a person in the second-row left area

Current sound field optimization center

FIG. 25

Detect that there is a person in the second-row right area

Current sound field optimization center

FIG. 26

2701

Detect that there are persons in the driver seat, the front passenger seat, the second-row left area, and the second-row right area

Current sound field optimization center

(a)

The volume of the speaker in the second-row left area has been reduced to 0

Detect that there are persons in the driver seat, the front passenger seat, the second-row left area, and the second-row right area

Current sound field optimization center

(b)

FIG. 27

Detect that there are persons in the driver seat, the front passenger seat, the second-row left area, and the second-row right area

Current sound field optimization center

(a)

The volume of the speaker in the second-row left area has been increased

Detect that there are persons in the driver seat, the front passenger seat, the second-row left area, and the second-row right area

Current sound field optimization center

(b)

FIG. 28

Sound box 1

Sound box 2

Sound box 3

FIG. 29

FIG. 30

3100

A first device obtains position information of a plurality of areas in which a plurality of users are located

3101

The first device controls, based on the position information of the plurality of areas and position information of a plurality of sound-making apparatuses, the plurality of sound-making apparatuses to work

3102

FIG. 31

Sound-making system 3200

A plurality of sound-making apparatuses 3203

Sound-making apparatus

Sound-making apparatus

⋮

Sound-making apparatus

Sensor 3201 → Controller 3202 →

FIG. 32

Apparatus 3300

Transceiver unit 3301

Processing unit 3302

FIG. 33

## INTERNATIONAL SEARCH REPORT

| International application No. |
| --- |
| **PCT/CN2022/102818** |

**A.    CLASSIFICATION OF SUBJECT MATTER**

H04S 7/00(2006.01)i;  B60R 16/023(2006.01)n

According to International Patent Classification (IPC) or to both national classification and IPC

**B.    FIELDS SEARCHED**

Minimum documentation searched (classification system followed by classification symbols)

H04S; B60R

Documentation searched other than minimum documentation to the extent that such documents are included in the fields searched

Electronic data base consulted during the international search (name of data base and, where practicable, search terms used)

CNTXT, CNKI, WPABS, ENTXT, ENTXTC: 车辆, 汽车, 车, 位置, 是否有, 是否存在, 人, 听者, 用户, 乘客, 乘坐, 座位, 占用, 改变, 调节, 调整, 振幅, 幅度, 强度, 音量, 扬声器, 传声, 发声, 距离, vehicle, car, user+, passenger+, person+, position?, location?, adjust?, chang+, volume?, amplitude?, speaker?, distance

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 113596705 A (HUAWEI TECHNOLOGIES CO., LTD.) 02 November 2021 (2021-11-02) claims 1-25 | 1-25 |
| X | CN 110149586 A (GUI'AN NEW DISTRICT XINTE ELECTRIC VEHICLE INDUSTRY CO., LTD.) 20 August 2019 (2019-08-20) description, paragraphs [0032]-[0091], and figures 1-8 | 1-25 |
| X | CN 109922411 A (HUIZHOU HUAZHIHANG TECHNOLOGY CO., LTD.) 21 June 2019 (2019-06-21) description, paragraphs [0032]-[0063], and figures 1-3 | 1-25 |
| X | CN 103220594 A (SOUND CHEERS LIMITED) 24 July 2013 (2013-07-24) description, paragraphs [0018]-[0028], and figures 1-7 | 1-25 |
| X | CN 112312280 A (BEIJING HORIZON ROBOTICS TECHNOLOGY RESEARCH AND DEVELOPMENT CO., LTD.) 02 February 2021 (2021-02-02) description, paragraphs [0035]-[0139], and figures 1-9 | 1-25 |
| A | CN 104270695 A (GOERTEK INC.) 07 January 2015 (2015-01-07) entire document | 1-25 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 July 2022** | **17 August 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/102818** |

### C. DOCUMENTS CONSIDERED TO BE RELEVANT

| Category* | Citation of document, with indication, where appropriate, of the relevant passages | Relevant to claim No. |
| --- | --- | --- |
| A | CN 103220597 A (SUZHOU SONAVOX ELECTRONICS CO., LTD.) 24 July 2013 (2013-07-24)<br>    entire document | 1-25 |
| A | CN 107592588 A (IFLYTEK CO., LTD.) 16 January 2018 (2018-01-16)<br>    entire document | 1-25 |
| A | CN 108834030 A (GUANGZHOU XPENG AUTOMOBILE TECHNOLOGY CO., LTD.) 16 November 2018 (2018-11-16)<br>    entire document | 1-25 |
| A | CN 108551623 A (SHANGHAI PATEO YUEZHEN NETWORKING TECHNOLOGY SERVICE CO., LTD.) 18 September 2018 (2018-09-18)<br>    entire document | 1-25 |
| A | US 2019141465 A1 (SQAND CO., LTD.) 09 May 2019 (2019-05-09)<br>    entire document | 1-25 |
| A | US 2021152939 A1 (ANALOG DEVICES, INC.) 20 May 2021 (2021-05-20)<br>    entire document | 1-25 |
| A | WO 2019112087 A1 (PTG CO., LTD.) 13 June 2019 (2019-06-13)<br>    entire document | 1-25 |

Form PCT/ISA/210 (second sheet) (January 2015)

**INTERNATIONAL SEARCH REPORT**
Information on patent family members

International application No.

**PCT/CN2022/102818**

| Patent document cited in search report | | | Publication date (day/month/year) | Patent family member(s) | | | Publication date (day/month/year) |
|---|---|---|---|---|---|---|---|
| CN | 113596705 | A | 02 November 2021 | None | | | |
| CN | 110149586 | A | 20 August 2019 | None | | | |
| CN | 109922411 | A | 21 June 2019 | None | | | |
| CN | 103220594 | A | 24 July 2013 | None | | | |
| CN | 112312280 | A | 02 February 2021 | None | | | |
| CN | 104270695 | A | 07 January 2015 | None | | | |
| CN | 103220597 | A | 24 July 2013 | WO | 2014153943 | A1 | 02 October 2014 |
| CN | 107592588 | A | 16 January 2018 | None | | | |
| CN | 108834030 | A | 16 November 2018 | WO | 2020062978 | A1 | 02 April 2020 |
| CN | 108551623 | A | 18 September 2018 | None | | | |
| US | 2019141465 | A1 | 09 May 2019 | EP | 3451696 | A1 | 06 March 2019 |
| | | | | KR | 101791843 | B1 | 31 October 2017 |
| | | | | WO | 2017188685 | A1 | 02 November 2017 |
| US | 2021152939 | A1 | 20 May 2021 | None | | | |
| WO | 2019112087 | A1 | 13 June 2019 | KR | 101927819 | B1 | 11 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110744208